# EUROPEAN PATENT APPLICATION

(11) **EP 4 632 520 A1**
(43) Date of publication of application: **15.10.2025**
(21) Application number: 24836143.8
(22) Date of filing: 20.03.2024
(51) Int. Cl.: G05D 1/644, G05D 1/43, G05D 1/243, G05D 1/622, G06F 3/048, G06V 20/56

(54) **ELECTRONIC DEVICE AND CONTROL METHOD THEREOF**

(30) Priority: 06.07.2023 KR 20230087911
(71) Applicant: Samsung Electronics Co., Ltd., Suwon-si, Gyeonggi-do 16677 (KR)
(72) Inventor: KANG, Seongmin, Suwon-si Gyeonggi-do 16677 (KR); HAN, Heungwoo, Suwon-si Gyeonggi-do 16677 (KR)
(74) Representative: Appleyard Lees IP LLP
(86) International application number: PCT/KR2024/003501
(87) International publication number: WO 2025/009689

(57) **Abstract**

An electronic apparatus includes a first sensor, a second sensor, at least one memory storing at least one instruction, and at least one processor operably connected with the first sensor, the second sensor, and the at least one memory, wherein the at least one processor, executing the at least one instruction, configured to acquire sensing data through the first sensor, identify a plurality of driving locations based on the sensing data, acquire a plurality of photographed images through the second sensor, store the plurality of driving locations and the plurality of photographed images in the at least one memory, and based on identifying an event preventing driving, identify a first time point corresponding to the event preventing driving, identify a second time point preceding the first time point by a threshold time, identify a driving location, among the plurality of driving locations, corresponding to the second time point, identify a photographed image, among the plurality of photographed images, corresponding to the second time point, and register the event preventing driving based on event information, and wherein the event information may include the driving location corresponding to the second time point and the photographed image corresponding to the second time point.

## Description

### [Technical Field]

The disclosure relates to an electronic apparatus and a controlling method thereof, and more particularly, to an electronic apparatus that controls driving by registering an event which prevents driving, and a controlling method thereof.

### [Background Art]

While a mobile electronic apparatus is in the process of driving, an event wherein moving of the electronic apparatus is interfered may occur. For example, a thin and long object such as an electric wire may exist on a driving route. Also, light cloth such as clothing or a potty pad of a pet, a small foot mat, etc. may exist on a driving route. An electronic apparatus may also drive into a narrow space such as a chair of a dining table, a clothes dryer, etc. wherein forward progress is prevented. Also, a situation wherein an electronic apparatus is stuck on a frame of a front door, etc. may exist. In addition, a situation wherein an electronic apparatus is trapped between complex structures may exist.

In a situation where an obstacle or a structure is recognized through an image sensor, there is a problem that it may take long time to recognize the obstacle, or the degree of recognition may be low. In particular, there is a problem that the recognition rate of obstacles deteriorates in situations where illumination is low.

### [Detailed Description of the Invention]

### [Technical Solution]

Provided are an electronic apparatus that registers an event preventing driving by using a location and an image on a time point prior to a time point when an event occurred, and a controlling method thereof.

An electronic apparatus includes a first sensor, a second sensor, at least one memory storing at least one instruction, and at least one processor operably connected with the first sensor, the second sensor, and the at least one memory, wherein the at least one processor, executing the at least one instruction, configured to acquire sensing data through the first sensor, identify a plurality of driving locations based on the sensing data, acquire a plurality of photographed images through the second sensor, store the plurality of driving locations and the plurality of photographed images in the at least one memory, and based on identifying an event preventing driving, identify a first time point corresponding to the event preventing driving, identify a second time point preceding the first time point by a threshold time, identify a driving location, among the plurality of driving locations, corresponding to the second time point, identify a photographed image, among the plurality of photographed images, corresponding to the second time point, and register the event preventing driving based on event information, and wherein the event information may include the driving location corresponding to the second time point and the photographed image corresponding to the second time point.

The at least one processor may identify a first driving location, among the plurality of driving locations, corresponding to the first time point, and identify a first photographed image, among the plurality of photographed images, corresponding to the first time point, and wherein the driving location corresponding to the second time point may include a second driving location, wherein the photographed image corresponding to the second time point may include a second photographed image, and wherein the second time point precedes the first time point.

The at least one processor may identify a target object related to the event preventing driving based on the second photographed image, and wherein the event information may include information regarding the target object.

The at least one processor may, based on the target object being a predetermined object indicating an unmovable object, register the event preventing driving based on the event information.

The event information may include the first driving location, the second driving location, the first photographed image, and the second photographed image.

The first sensor may include one of a LiDAR sensor, an infra-red sensor, a three-dimensional (3D) depth camera, and a 3D visual sensor, and the second sensor may include an image sensor configured to acquire photographic images.

The at least one processor may identify a third driving location, among the plurality of driving locations, corresponding to a third time point, identify a third photographed image, among the plurality of photographed images, corresponding to the third time point, based on the third driving location corresponding to the second driving location, acquire a degree of similarity between the second photographed image and the third photographed image, and based on the degree of similarity being greater than or equal to a threshold value, drive along a path that evades the third driving location.

The at least one processor may acquire a plurality of driving directions corresponding to one or more directions in which the electronic apparatus moves, and based on identifying the event preventing driving, identify a first driving direction, among the plurality of driving directions, corresponding to the first time point, and identify a second driving direction, among the plurality of driving directions, corresponding to the second time point, and wherein the event information includes the second driving location, the second driving direction, and the second photographed image.

The at least one processor may identify a third driving direction, among the plurality of driving directions, corresponding to the third time point, and based on the third driving location corresponding to the second driving location and the third driving direction corresponding to the second driving direction, identify a degree of similarity between the second photographed image and the third photographed image, and based on the degree of similarity being greater than or equal to a threshold value, drive along a path that evades the third driving location.

The at least one processor may generate a user interface indicating the first driving location.

A method of controlling an electronic apparatus includes acquiring sensing data, identifying a plurality of driving locations based on the sensing data, acquiring a plurality of photographed images, storing the plurality of driving locations and the plurality of photographed images, based on identifying an event preventing driving, identifying a first time point corresponding to the event preventing driving, identifying a second time point preceding the first time point by a threshold time, identifying a driving location, among the plurality of driving locations, corresponding to the second time point, identifying a photographed image, among the plurality of photographed images, corresponding to the second time point, and registering the event preventing driving based on event information, and wherein the event information comprises the driving location corresponding to the second time point and the photographed image corresponding to the second time point.

The method includes identifying a first driving location, among the plurality of driving locations, corresponding to the first time point, and identifying a first photographed image, among the plurality of photographed images, corresponding to the first time point, and wherein the driving location corresponding to the second time point may include a second driving location, wherein the photographed image corresponding to the second time point may include a second photographed image, and wherein the second time point precedes the first time point.

The method includes identifying a target object related to the event preventing driving based on the second photographed image, and wherein the event information may include information regarding the target object.

The registering includes based on the target object being a predetermined object indicating an unmovable object, registering the event preventing driving based on the event information.

The event information includes the first driving location, the second driving location, the first photographed image, and the second photographed image.

### [Brief Description of the Drawings]

The above and other aspects, features, and advantages of certain embodiments of the present disclosure will be more apparent from the following description taken in conjunction with the accompanying drawings, in which:
FIG. 1 is a block diagram illustrating an electronic apparatus according to an embodiment of the disclosure;
FIG. 2 is a block diagram illustrating a detailed configuration of the electronic apparatus in FIG. 1;
FIG. 3 is a diagram illustrating a location recognition module included in an electronic apparatus of an embodiment of the disclosure;
FIG. 4 is a diagram illustrating a rotation angle of an electronic apparatus of an embodiment of the disclosure;
FIG. 5 is a diagram illustrating an event preventing driving;
FIG. 6 is a flow chart illustrating an operation of registering an event preventing driving according to an embodiment of the disclosure;
FIG. 7 is a flow chart illustrating an operation of registering an event preventing driving according to an embodiment of the disclosure;
FIG. 8 is a flow chart illustrating an operation of identifying an object according to an embodiment of the disclosure;
FIG. 9 is a flow chart illustrating an operation of determining a characteristic of an object according to an embodiment of the disclosure;
FIG. 10 is a flow chart illustrating an operation of determining whether event information is stored in advance according to an embodiment of the disclosure;
FIG. 11 is a diagram illustrating information acquired in real time in an electronic apparatus;
FIG. 12 is a diagram illustrating event information;
FIG. 13 is a flow chart illustrating operations of an electronic apparatus and a server according to an embodiment of the disclosure;
FIG. 14 is a flow chart illustrating operations of an electronic apparatus and a server according to an embodiment of the disclosure;
FIG. 15 is a diagram illustrating an event registration screen according to an embodiment of the disclosure;
FIG. 16 is a diagram illustrating an event registration screen according to an embodiment of the disclosure;
FIG. 17 is a diagram illustrating an operation of selecting an event photograph according to an embodiment of the disclosure;
FIG. 18 is a diagram illustrating an operation of selecting an event location according to an embodiment of the disclosure;
FIG. 19 is a flow chart illustrating an operation of performing evasive driving according to an embodiment of the disclosure;
FIG. 20 is a flow chart illustrating an operation of performing evasive driving according to an embodiment of the disclosure;
FIG. 21 is a diagram illustrating an operation of performing evasive driving by using an area corresponding to an event location according to an embodiment of the disclosure;
FIG. 22 is a flow chart illustrating an operation of performing evasive driving according to an embodiment of the disclosure according to an embodiment of the disclosure;
FIG. 23 is a flow chart illustrating an operation of performing evasive driving according to an embodiment of the disclosure;
FIG. 24 is a flow chart illustrating an operation of performing evasive driving according to an embodiment of the disclosure;
FIG. 25 is a flow chart illustrating operations of an electronic apparatus and a server according to an embodiment of the disclosure;
FIG. 26 is a flow chart illustrating operations of an electronic apparatus and a server according to an embodiment of the disclosure;
FIG. 27 is a diagram illustrating a report screen according to an embodiment of the disclosure;
FIG. 28 is a diagram illustrating a report screen according to an embodiment of the disclosure;
FIG. 29 is a diagram illustrating a report screen according to an embodiment of the disclosure; and
FIG. 30 is a flow chart illustrating a controlling method of an electronic apparatus according to an embodiment of the disclosure.

### [Mode for Implementing the Invention]

Hereinafter, example embodiments of the disclosure will be described in detail with reference to the accompanying drawings.

As terms used in the embodiments of the disclosure, general terms that are currently used widely were selected where possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant, and in such cases, the meaning of the terms will be described in detail in the relevant descriptions in the disclosure. Accordingly, the terms used in the disclosure should be defined based on the meaning of the terms and the overall content of the disclosure, and not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A or B" should be interpreted to mean "A" or "B" or "A and B."

Further, the expressions "first," "second," and the like used in this specification may be used to describe various elements regardless of any order and/or degree of importance. Also, such expressions are used only to distinguish one element from another element, and are not intended to limit the elements.

The description in the disclosure that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

Also, singular expressions include plural expressions, as long as they do not obviously mean differently in the context. Further, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, "a module" or "a part" performs at least one function or operation, and may be implemented as hardware or software, or as a combination of hardware and software. Further, a plurality of "modules" or "parts" may be integrated into at least one module and implemented as at least one processor, except "modules" or "parts" which need to be implemented as specific hardware.

Also, in this specification, the term "user" may refer to a person who uses an electronic apparatus or an apparatus using an electronic apparatus (e.g., an artificial intelligence electronic apparatus).

Hereinafter, embodiments of the disclosure will be described in more detail with reference to the accompanying drawings.

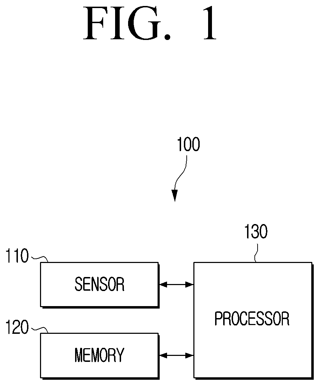

FIG. 1 is a block diagram illustrating an electronic apparatus 100 according to an embodiment of the disclosure.

The electronic apparatus 100 may include at least one of a sensor 110, a memory 120, or at least one processor 130.

The electronic apparatus 100 may mean an electronic apparatus for controlling a mobile electronic apparatus or a mobile apparatus. For example, the electronic apparatus 100 may mean a mobile robot that can drive, or an apparatus for controlling a mobile robot. Also, the electronic apparatus 100 may be a server performing an analyzing operation for controlling driving of an apparatus.

According to one or more embodiments, the electronic apparatus 100 may be a mobile cleaning robot that performs a cleaning operation.

The sensor 110 may sense sensing data. The sensor 110 may include at least one sensor. The at least one sensor may be one of a light detection and ranging (LiDAR) sensor sensing locations, an image sensor photographing images, or an acceleration sensor (or a gyro sensor) sensing rotation angles. According to one or more embodiments, one sensor may sense all of locations, images, rotation angles, etc. sensor

The sensor 110 may include a first sensor and a second sensor, and the at least one processor 130 may acquire a plurality of driving locations through the first sensor, and acquire a plurality of photographed images through the second sensor.

The first sensor may be a sensor that acquires sensing data for the surrounding environment. The first sensor may be a LiDAR sensor, an infra-red (IR) sensor, a three-dimensional (3D) depth camera, a 3D visual sensor, etc. The at least one processor 130 may acquire a driving location of the electronic apparatus 100 based on sensing data acquired at the first sensor.

The number of the first sensor may be described as 110-1, and the number of the second sensor may be described as 110-2.

The second sensor may be an image sensor. The image sensor may include a camera. The at least one processor 130 may acquire a photographed image around the electronic apparatus 100 based on sensing data acquired at the second sensor.

The memory 120 may store sensing data or processed sensing data. Also, the memory 120 may store at least one instruction.

The at least one processor 130 may perform overall control operations of the electronic apparatus 100. Specifically, the at least one processor 130 performs a function of controlling the overall operations of the electronic apparatus 100. The at least one processor 130 may be connected with the memory 120, and control the electronic apparatus 100.

The at least one processor 130 may store the plurality of driving locations and the plurality of photographed images acquired through the sensor 110 in the memory 120, and if an event preventing driving is identified, identify a first time point when the event preventing driving occurred, identify a second time point prior to the first time point by a threshold time, acquire a location corresponding to the second time point among the plurality of driving locations, acquire a photographed image corresponding to the second time point among the plurality of photographed images, and register the event preventing driving based on event information including the location corresponding to the second time point and the photographed image corresponding to the second time point.

The at least one processor 130 may acquire sensing data through the first sensor. The at least one processor 130 may determine a driving location of the electronic apparatus 100 based on the sensing data. The first sensor may be a sensor that collects data used for identifying location information. The sensing data may include data used for identifying location information.

For example, the first sensor may be a location recognition sensor. The first sensor may include, for example, at least one of a LiDAR sensor, an infra-red (IR) sensor), a 3D depth camera, or a 3D visual sensor. The at least one processor 130 may acquire sensing data acquired at the location recognition sensor.

According to an embodiment, the at least one processor 130 may determine a driving location of the electronic apparatus 100 based on sensing data acquired through the first sensor and map information stored in the memory. The map information may include at least one of location information or space information of a space wherein the electronic apparatus 100 drives.

The at least one processor 130 may identify a relative driving location of the electronic apparatus 100 based on the sensing data and the map information acquired through the first sensor.

The location information may include coordinate information of a space wherein there is a possibility that the electronic apparatus 100 may drive.

The space information may include identification information for at least one space. For example, the identification information may be information indicating a living room, a room 1, a room 2, a room 3, etc.

The at least one processor 130 may identify a specific location corresponding to the sensing data among a plurality of locations included in the map information. The at least one processor 130 may determine the driving location of the electronic apparatus 100 according to the specific location.

The map information may store information wherein location information and space information of a space wherein the electronic apparatus 100 drives are mapped. For example, the map information may include location information corresponding to the living room, location information corresponding to the room 1, location information corresponding to the room 2, and location information corresponding to the room 3. According to various implementation examples, the map information may include location information while distinction of spaces is not made.

The at least one processor 130 may identify the driving location of the electronic apparatus 100 among the plurality of locations included in the map information based on the sensing data acquired through the first sensor. The driving location of the electronic apparatus 100 may be described as the current location of the electronic apparatus 100 or a location corresponding to the sensing data.

According to an embodiment, the at least one processor 130 may directly determine a driving location of the electronic apparatus 100 based on the sensing data acquired through the first sensor. The sensing data may include location information that can specify a location of an apparatus.

According to one or more embodiments, the first sensor may include a sensor that recognizes an absolute location. For example, the first sensor may include a GPS sensor. The at least one processor 130 may identify the absolute location of the electronic apparatus 100 through the GPS sensor. The at least one processor 130 may identify the driving location of the electronic apparatus 100 based on the absolute location of the electronic apparatus 100 and the map information. The at least one processor 130 may acquire the driving location of the electronic apparatus 100 and a photographed image in real time based on the sensing data received through the sensor 110.

The at least one processor 130 may acquire and store the location of the electronic apparatus 100 in real time. The at least one processor 130 may acquire and store photographed images photographed in each location.

The at least one processor 130 may proceed with a driving operation until an event preventing driving is identified. Also, the at least one processor 130 may proceed with a driving operation until driving is completed.

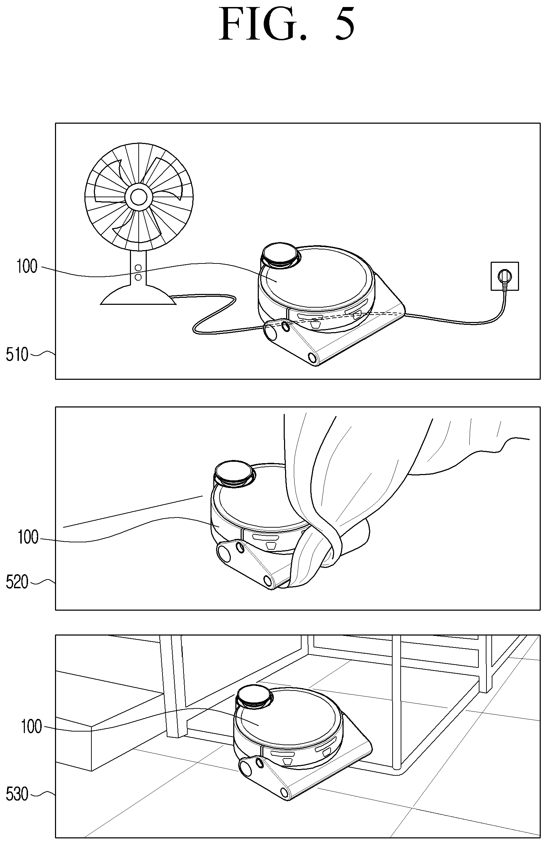

If an event preventing driving is identified, the at least one processor 130 may stop the driving operation. An event preventing driving may include an event wherein the driving of the electronic apparatus 100 is no longer possible or an event wherein it is necessary to stop the driving of the electronic apparatus 100. For example, an event preventing driving may include a state wherein the electronic apparatus 100 is trapped. Explanation in this regard will be described in FIG. 5.

The at least one processor 130 may identify an event preventing driving based on a changed amount of the location of the electronic apparatus 100.

According to one or more embodiments, if a change of the location is within a threshold range even if the motor is being driven, the at least one processor 130 may determine that an event preventing driving was identified.

According to one or more embodiments, if a change of the location is within the threshold range even if expected driving route information exists, the at least one processor 130 may determine that an event preventing driving was identified.

According to one or more embodiments, in case the motor is not driven in spite of an instruction for driving the motor, the at least one processor 130 may determine that an event preventing driving was identified.

After a driving location and a photographed image are stored in the memory 120, the at least one processor 130 may store the stored driving location and photographed image during a first threshold time.

When the first threshold time passes, the at least one processor 130 may delete the driving location and the photographed image stored in the memory 120 from the memory 120.

The at least one processor 130 may acquire a first location corresponding to the first time point, and a first photographed image corresponding to the first time point through the sensor 110, and the location corresponding to the second time point may be a second location, the photographed image corresponding to the second time point may be a second photographed image, and the second time point may be a time point prior to the first time point.

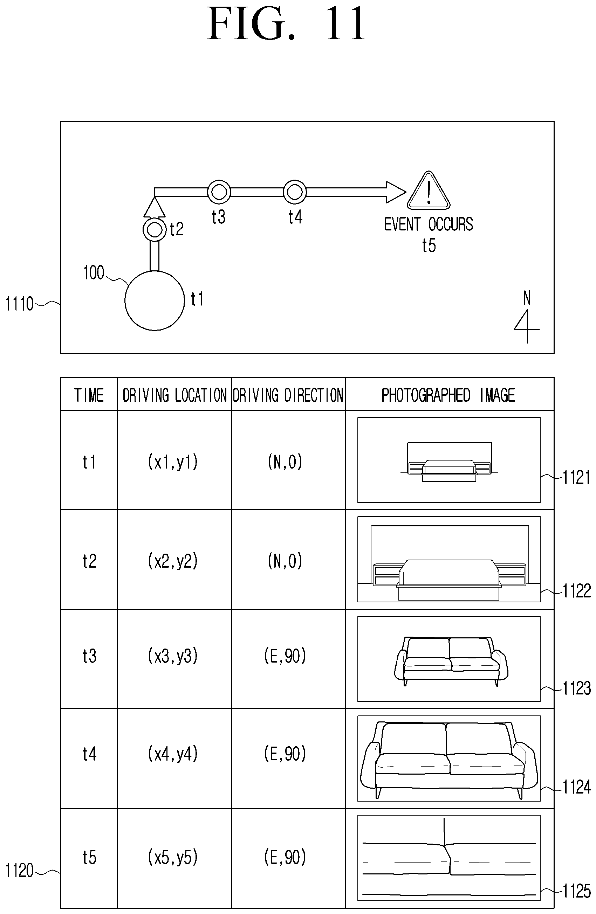

If an event preventing driving is identified, the at least one processor 130 may identify a time point when the event preventing driving occurred as the first time point. The first time point may correspond to t5 in FIG. 11.

When the first time point is identified, the at least one processor 130 may identify the second time point prior to the first time point by a second threshold time point. The at least one processor 130 may acquire the second location and the second photographed image corresponding to the second time point.

According to one or more embodiments, the first threshold time point and the second threshold time point may be different. The first threshold time point may be bigger than the second threshold time point. For example, the first threshold time point may be five seconds, and the second threshold time point may be two seconds.

According to one or more embodiments, the first threshold time point and the second threshold time point may be identical. For example, the first threshold time point and the second threshold time point may be two seconds. If the first threshold time point and the second threshold time point are identical, the amount of data stored in the memory can be minimized.

The at least one processor 130 may identify a target object related to the event preventing driving based on the second photographed image, and register the event preventing driving based on event information including the second location, the second photographed image, and the target object.

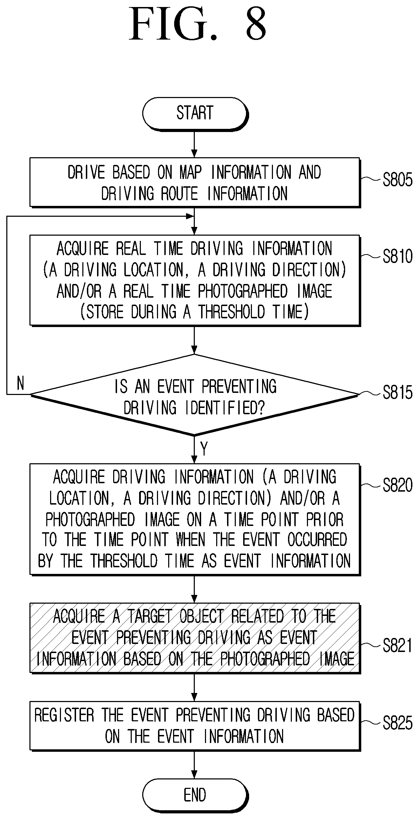

The at least one processor 130 may analyze the second photographed image, and identify the cause of the event preventing driving. The at least one processor 130 may identify at least one object included in the second photographed image. The at least one processor 130 may identify a target object related to the event preventing driving among the identified at least one object. The target object may be an object that has a possibility of interfering with the driving of the electronic apparatus 100. Also, the target object may be a predetermined object. Explanation regarding the target object will be described in FIG. 8.

The at least one processor 130 may, if the target object is a predetermined object indicating an unmovable object, register the event preventing driving based on the event information.

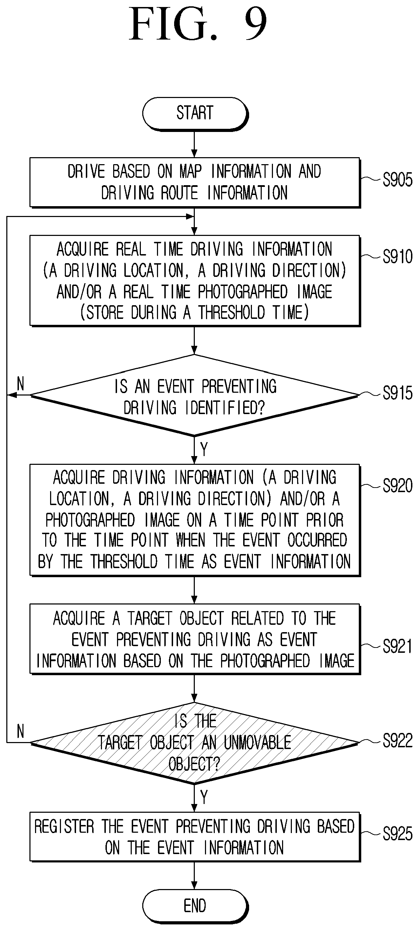

An unmovable object may be a predetermined object. For example, an unmovable object may include a bed, a sofa, a wall, etc. Explanation in this regard will be described in FIG. 9.

An unmovable object may be replaced with an unremovable object.

The at least one processor 130 may register an event preventing driving based on event information including the first location, the second location, the first photographed image, and the second photographed image.

The at least one processor 130 may include not only information corresponding to the second time point (the second location, the second photographed image), but also information corresponding to the first time point (the first location, the first photographed image) in the event information. The at least one processor 130 may register the event preventing driving by using both of the first time point and the second time point. The information corresponding to the first time point may be information related to occurrence of an event. The information corresponding to the second time point may be information related to expectation of an occurrence of an event. Information related to the first time point and the second time point will be described in FIG. 11.

After registering the event preventing driving, the at least one processor 130 may acquire a third location corresponding to a third time point, and acquire a third photographed image corresponding to the third time point through the sensor 110, and if the third location corresponds to the second location, acquire similarity between the second photographed image and the third photographed image, and if the similarity is greater than or equal to a threshold value, drive to evade the third location.

After registering the event preventing driving, the at least one processor 130 may keep acquiring the location and a photographed image of the electronic apparatus 100 in real time. A time point when an event preventing driving occurred is described as the first time point, and a third time point after the first time point when the event preventing driving was registered is assumed. The at least one processor 130 may acquire information corresponding to the third time point (the third location, the third photographed image).

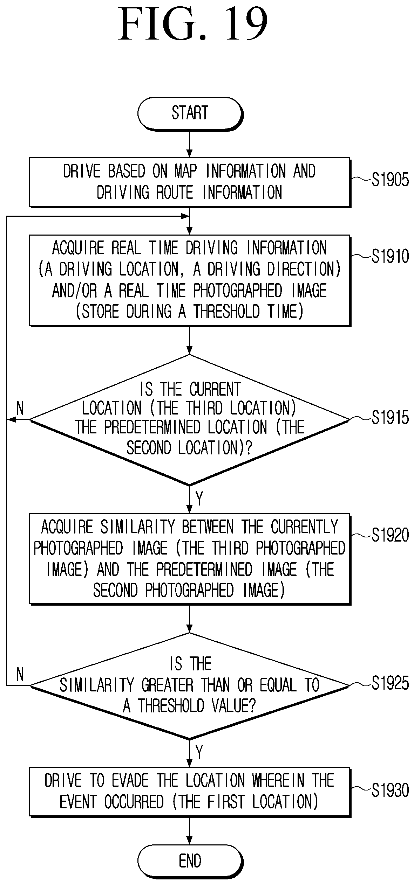

The at least one processor 130 may perform an operation related to the registered event based on the information acquired on the third time point. An operation related to the registered event may include determining whether to perform an evading operation regarding a location corresponding to the registered event. Detailed explanation in this regard will be described in FIG. 19.

The at least one processor 130 may acquire a plurality of driving directions wherein the electronic apparatus 100 drives through the sensor 110, and acquire a first direction corresponding to the first time point, acquire a second direction corresponding to the second time point, and register an event preventing driving based on event information including the second location, the second direction, and the second photographed image.

According to one or more embodiments, the sensor 110 may include a third sensor, and the at least one processor 130 may acquire a driving direction through the third sensor. The third sensor may be an acceleration sensor or a gyro sensor.

The driving direction may mean the direction in which the electronic apparatus 100 moves. The driving direction may include an absolute direction value. Explanation in this regard will be described in FIG. 11.

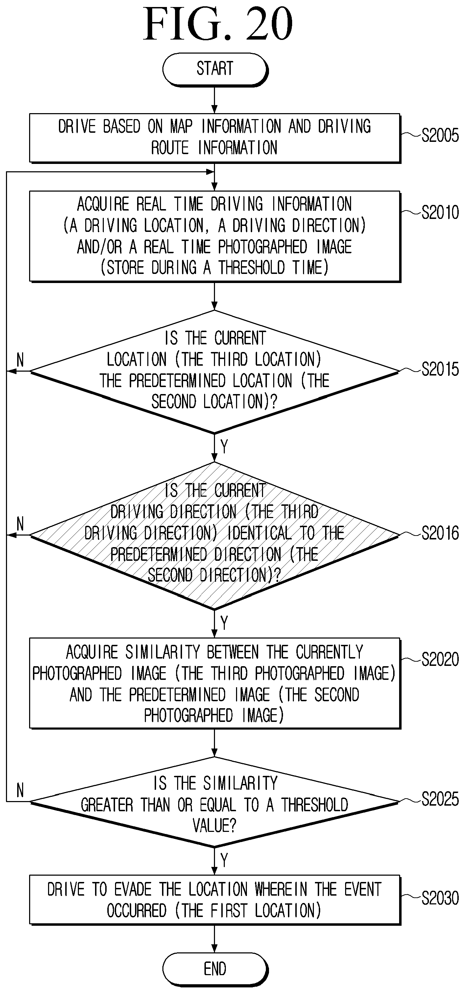

The at least one processor 130 may acquire a third direction corresponding to the third time point, and if the third location corresponds to the second location, identify whether the third driving direction corresponds to the second direction, and if the third driving direction corresponds to the second direction, acquire similarity between the second photographed image and the third photographed image. Detailed explanation in this regard will be described in FIG. 20.

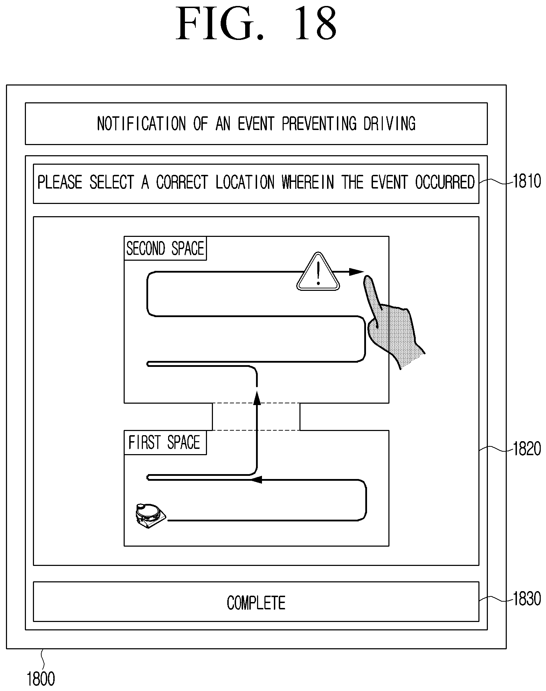

The at least one processor 130 may provide (i.e., generate) a screen including a user interface (UI) indicating the first location. Explanation in this regard will be described in FIG. 18.

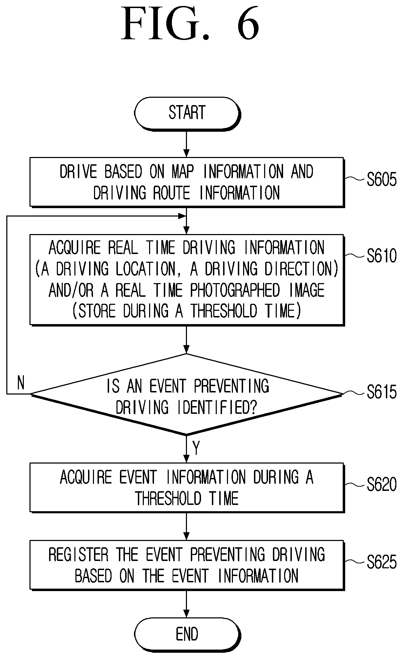

A process of registering an event preventing driving will be described in FIG. 6 to FIG. 18.

A process after registering an event preventing driving will be described in FIG. 19 to FIG. 29.

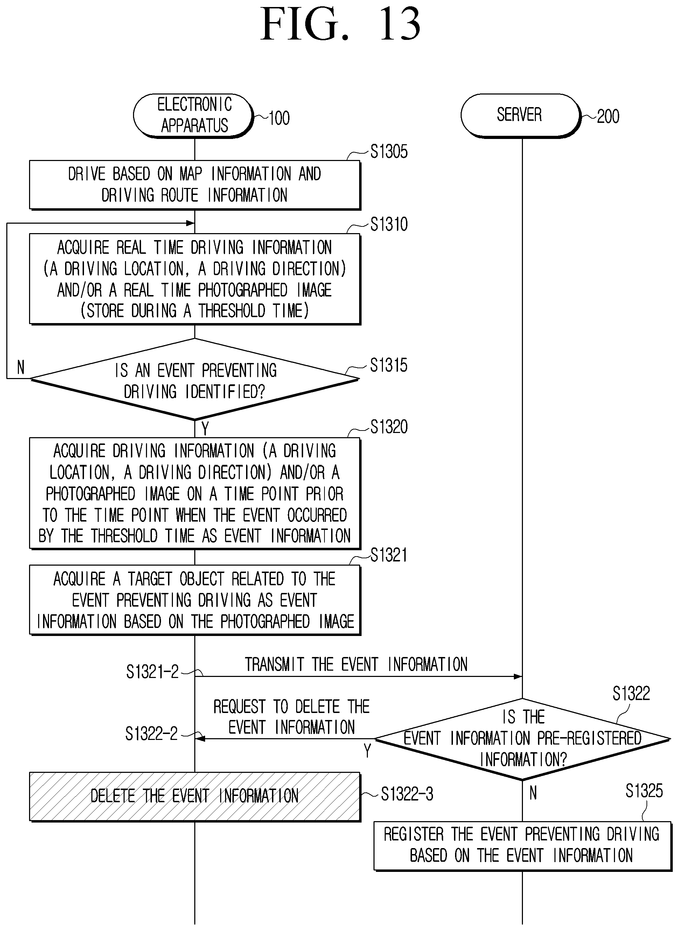

A subject performing an operation related to an event preventing driving may be the electronic apparatus 100, a server 200, a terminal apparatus 300, etc. Various embodiments related to this will be described in FIG. 13, FIG. 14, FIG. 25, and FIG. 26.

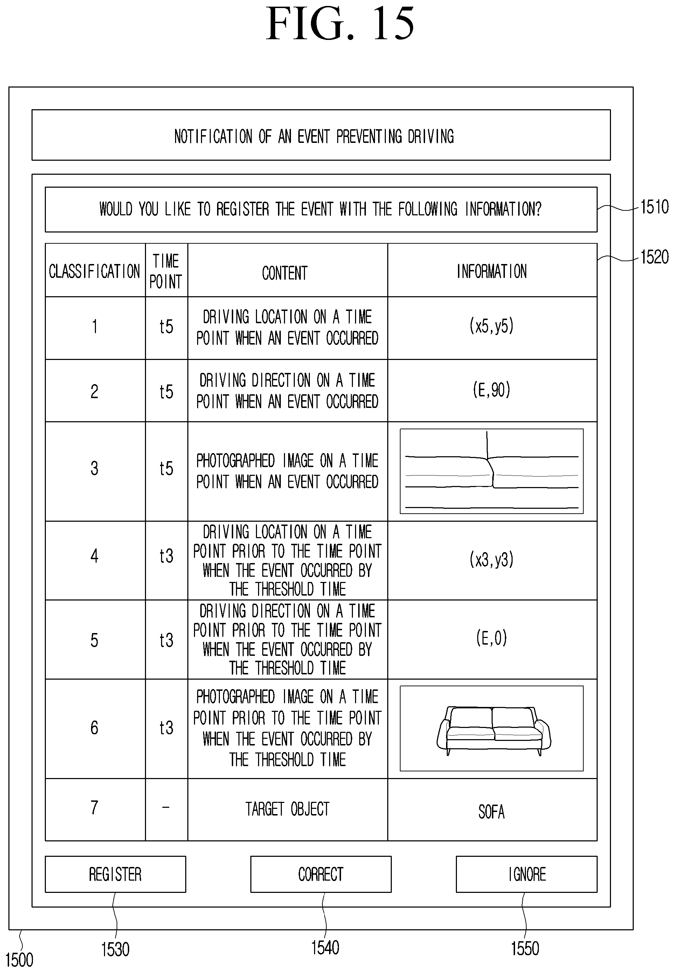

A screen related to an event preventing driving may be provided to a user. Various embodiments related to this will be described in FIG. 15, FIG. 16, FIG. 17, FIG. 18, FIG. 27, FIG. 28, and FIG. 29.

By registering an event preventing driving, the electronic apparatus 100 may perform an evading operation in advance. In the case of performing an evading operation in advance, driving stability can be improved.

It was described that the electronic apparatus 100 may include two sensors. However, according to one or more embodiments, the electronic apparatus 100 may include one sensor. The one sensor may include only an image sensor. The image sensor may be described as a vision sensor or an RGB sensor. The electronic apparatus 100 may analyze ambient objects by using a photographed image acquired through the image sensor. The electronic apparatus 100 may store map information including coordinate information related to locations of at least one object included in a space to be cleaned and a driving space. The electronic apparatus 100 may analyze the relative driving location of the electronic apparatus 100 based on the objects analyzed through the image and the map information.

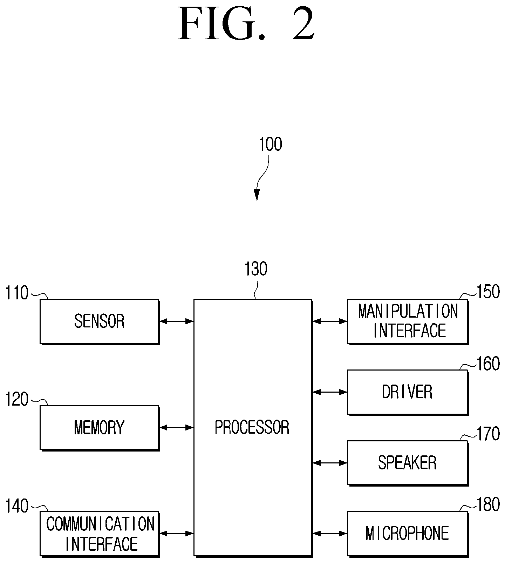

FIG. 2 is a block diagram for illustrating a detailed configuration of the electronic apparatus 100 in FIG. 1.

Referring to FIG. 2, the electronic apparatus 100 may include at least one of a sensor 110, a memory 120, at least one processor 130, a communication interface 140, a manipulation interface 150, a driver 160, a speaker 170, or a microphone 180.

Among the operations of the sensor 110, the memory 120, and the at least one processor 130, regarding operations identical to those described above, overlapping explanation will be omitted.

The memory 120 may be implemented as an internal memory such as a ROM (e.g., an electrically erasable programmable read-only memory (EEPROM)), a RAM, etc., included in the at least one processor 130, or implemented as a separate memory from the at least one processor 130. In this case, the memory 120 may be implemented in the form of a memory embedded in the electronic apparatus 100, or implemented in the form of a memory that can be attached to or detached from the electronic apparatus 100 according to the use of stored data. For example, in the case of data for driving the electronic apparatus 100, the data may be stored in a memory embedded in the electronic apparatus 100, and in the case of data for an extended function of the electronic apparatus 100, the data may be stored in a memory that can be attached to or detached from the electronic apparatus 100.

In the case of a memory embedded in the electronic apparatus 100, the memory may be implemented as at least one of a volatile memory (e.g.: a dynamic RAM (DRAM), a static RAM (SRAM), or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive, or a solid state drive (SSD)). In the case of a memory that can be attached to or detached from the electronic apparatus 100, the memory may be implemented as forms such as a memory card (e.g., compact flash (CF), secure digital (SD), micro secure digital (Micro-SD), mini secure digital (Mini-SD), extreme digital (xD), a multi-media card (MMC), etc.), an external memory that can be connected to a USB port (e.g., a USB memory), etc.

The at least one processor 130 may be implemented as a digital signal processor (DSP) processing digital signals, a microprocessor, and a time controller (TCON). However, the disclosure is not limited thereto, and the at least one processor 130 may include one or more of a central processing unit (CPU), a micro controller unit (MCU), a micro processing unit (MPU), a controller, an application processor (AP), a graphics-processing unit (GPU) or a communication processor (CP), and an advanced reduced instruction set computer (RISC) machines (ARM) processor, or may be defined by the terms. Also, the at least one processor 130 may be implemented as a system on chip (SoC) having a processing algorithm stored therein or large scale integration (LSI), or in the form of a field programmable gate array (FPGA). The at least one processor 130 may perform various functions by executing computer executable instructions stored in the memory.

The communication interface 140 is a component that performs communication with various types of external apparatuses according to various types of communication methods. The communication interface 140 may include a wireless communication module or a wired communication module. Each communication module may be implemented in the form of at least one hardware chip.

A wireless communication module may be a module that communicates with an external apparatus wirelessly. For example, a wireless communication module may include at least one module among a Wi-Fi module, a Bluetooth module, an infrared communication module, or other communication modules.

A Wi-Fi module and a Bluetooth module may perform communication by a Wi-Fi method and a Bluetooth method, respectively. In the case of using a Wi-Fi module or a Bluetooth module, various types of connection information such as a service set identifier (SSID) and a session key, etc. is transmitted and received first, and connection of communication is performed by using the information, and various types of information can be transmitted and received thereafter.

An infrared communication module performs communication according to an infrared Data Association (IrDA) technology of transmitting data to a near field wirelessly by using infrared rays between visible rays and millimeter waves.

Other communication modules may include at least one communication chip that performs communication according to various wireless communication protocols such as Zigbee, 3rd Generation (3G), 3rd Generation Partnership Project (3GPP), Long Term Evolution (LTE), LTE Advanced (LTE-A), 4th Generation (4G), 5th Generation (5G), etc. other than the aforementioned communication methods.

A wired communication module may be a module that communicates with an external apparatus via wire. For example, a wired communication module may include at least one of a local area network (LAN) module, an Ethernet module, a pair cable, a coaxial cable, an optical fiber cable, or an ultra wide-band (UWB) module.

The manipulation interface 150 may be implemented as an apparatus such as a button, a touch pad, a mouse, and a keyboard, or as a touch screen that can perform both of the aforementioned display function and a manipulation input function. A button may be various types of buttons such as a mechanical button, a touch pad, a wheel, etc. formed in any areas such as the front surface part or the side surface part, the rear surface part, etc. of the exterior of the main body of the electronic apparatus 100.

The driver 160 may be a component that generates and transmits a physical force controlling the driving of the electronic apparatus 100. The driver 160 may include a motor.

The speaker 170 may be a component that outputs not only various kinds of audio data but also various kinds of notification sounds or voice messages, etc.

The electronic apparatus 100 may further include a microphone 180.

The microphone 180 is a component for receiving input of a user voice or other sounds, and converting them into audio data. The microphone 180 may receive a user's voice in an activated state. For example, the microphone 180 may be formed as an integrated type on the upper side or the front surface direction, the side surface direction, etc. of the electronic apparatus 100. The microphone 180 may include various components such as a microphone collecting a user voice in an analogue form, an amp circuit amplifying the collected user voice, an A/D conversion circuit that samples the amplified user voice and converts the user voice into a digital signal, a filter circuit that removes noise components from the converted digital signal, etc.

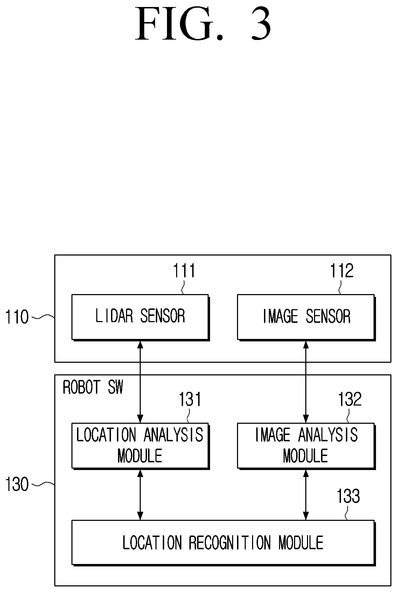

FIG. 3 is a diagram for illustrating a location recognition module included in an embodiment of the electronic apparatus 100.

Referring to FIG. 3, the electronic apparatus 100 may include a sensor 110 and a processor 130. The sensor 110 may include at least one of a first sensor 111 or a second sensor 112.

The first sensor 111 may be a sensor that senses data analyzing spaces or locations. For example, the first sensor 111 may be a LiDAR sensor.

The second sensor 112 may be a sensor that senses data analyzing images. For example, the second sensor 112 may be an image sensor.

The at least one processor 130 may include at least one of a location analysis module 131, an image analysis module 132, or a location recognition module 133.

The location analysis module 131 may analyze the location of the electronic apparatus 100 or analyze the space wherein the electronic apparatus 100 is located based on the first sensing data acquired through the first sensor 111. The analyzed result data may be described as the first result data.

The image analysis module 132 may acquire characteristic data included in a photographed image based on the second sensing data acquired through the second sensor 112. The analyzed result data may be described as the second result data.

The location recognition module 133 may recognize (or identify) the location of the electronic apparatus 100 based on the first result data acquired through the location analysis module 131 and the second result data acquired through the image analysis module 132.

According to one or more embodiments, the sensor 110 of the electronic apparatus 100 may include a 3D depth sensor or an RGB sensor.

According to one or more embodiments, the electronic apparatus 100 may include at least one of an object recognition model, a recognition result post-processing part, a location information adjustment part, an image information storage part, a location comparison part, or an image comparison part.

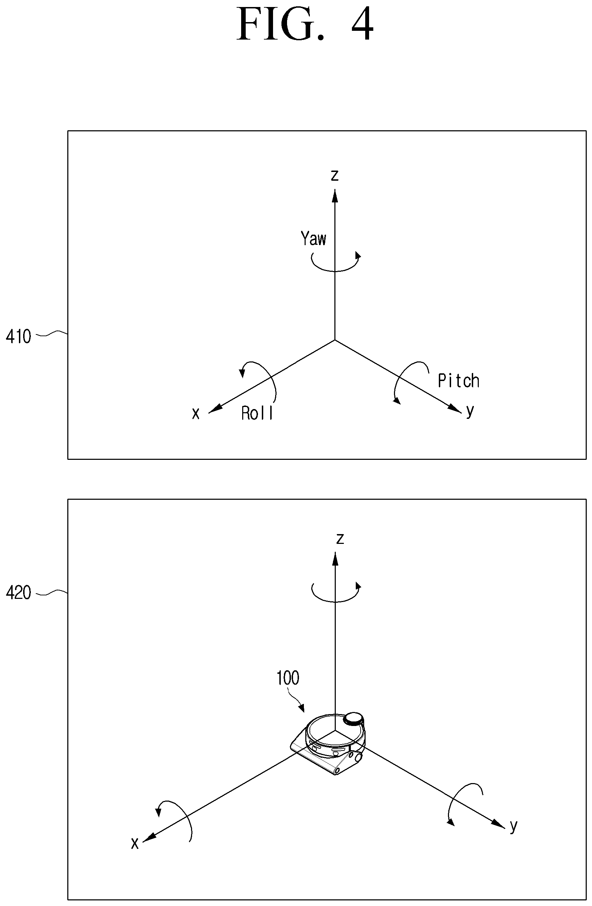

FIG. 4 is a diagram for illustrating a rotation angle of the electronic apparatus 100.

The embodiment 410 in FIG. 4 is a graph that defined rotation directions according to x, y, and z axes. Rotating based on the x axis may be defined as roll, rotating based on the y axis may be defined as pitch, and rotating based on the z axis may be defined as yaw.

In the embodiment 420 in FIG. 4, the rotation direction of the electronic apparatus 100 may be described as the rotation direction defined in the embodiment 1010. Also, the x axis rotation information of the electronic apparatus 100 may correspond to the roll of the electronic apparatus 100 of rotating based on the x axis. The y axis rotation information of the electronic apparatus 100 may correspond to the pitch of the electronic apparatus 100 of rotating based on the y axis. The z axis rotation information of the electronic apparatus 100 may correspond to the yaw of the electronic apparatus 100 of rotating based on the z axis.

The x axis rotation information may be described as the first axis rotation information, the first axis tilt information, or the horizontal warping information. The y axis rotation information may be described as the second axis rotation information, the second axis tilt information, or the vertical tilt information. The z axis rotation information may be described as the third axis rotation information, the third axis tilt information, or the horizontal tilt information.

The sensor 110 may acquire the state information (or the tilt information) of the electronic apparatus 100. The state information of the electronic apparatus 100 may mean the rotation state of the electronic apparatus 100. The sensor 110 may include at least one of a gravity sensor, an acceleration sensor, or a gyro sensor. The x axis rotation information of the electronic apparatus 100 and the y axis rotation information of the electronic apparatus 100 may be determined based on the sensing data acquired through the sensor 110.

The z axis rotation information may be acquired based on how much the electronic apparatus 100 rotated according to the movement of the electronic apparatus 100.

According to one or more embodiments, the z axis rotation information may indicate how much the electronic apparatus 100 rotated toward the z axis during a predetermined time. For example, the z axis rotation information may indicate how much the electronic apparatus 100 rotated toward the z axis on the second time point based on the first time point.

FIG. 5 is a diagram for illustrating an event preventing driving.

Referring to the embodiment 510 in FIG. 5, the electronic apparatus 100 may drive on an electric wire that is placed on the bottom. In the case of driving while treading on an electric wire in a state wherein the electric wire exists on the bottom, the electronic apparatus 100 may be placed in an unmovable state.

Referring to the embodiment 520 in FIG. 5, the electronic apparatus 100 may contact cotton fabric such as a curtain or a carpet. In case the cotton fabric is tangled around the wheel or the cleaning member, etc. while the electronic apparatus 100 moves, the electronic apparatus 100 may be placed in an unmovable state.

Referring to the embodiment 530 in FIG. 5, the electronic apparatus 100 may contact a fixed object (or thing). The electronic apparatus 100 may enter the lower part or the inside of the fixed object while moving, and may be placed in an unmovable state due to the fixed object.

FIG. 6 is a flow chart for illustrating an operation of registering an event preventing driving according to an embodiment of the disclosure.

Referring to FIG. 6, the electronic apparatus 100 may drive based on map information and driving route information in operation S605. The map information may include information on a space wherein the electronic apparatus 100 exists. Also, the map information may include information on a space to which the electronic apparatus 100 should move. The driving route information may include information related to the route wherein the electronic apparatus 100 actually moves based on the map information. The map information may include information on spaces, and the driving route information may include information on the moving of the electronic apparatus 100. The map information may also be described as global map information.

The electronic apparatus 100 may acquire real time driving information and a real time photographed image in operation S610. The electronic apparatus 100 may store the real time driving information and the real time photographed image in the memory 120 during a threshold time. The threshold time may be changed according to the user's setting. The electronic apparatus 100 may delete the real time driving information and the real time photographed image from the memory 120 after the threshold time passes. The photographed image may be included in the environment information.

The driving information may include at least one of a driving location or a driving direction. A driving location may include a coordinate wherein the electronic apparatus 100 is located during driving. For example, a driving location may be described as a two-dimensional coordinate such as (x, y), etc. or a three-dimensional coordinate such as (x, y, z), etc. in the map information. A driving direction may include a direction of a predetermined part while the electronic apparatus 100 is driving. A driving direction may include a direction which a predetermined part (a part wherein the cleaning member exists or a part wherein the camera exists) is toward at the time of general driving (at the time of driving which is not backward driving). A driving direction may also be described as a heading direction of the electronic apparatus 100.

Standards related to a driving location and a driving direction will be described in connection with FIG. 4 or FIG. 11.

The electronic apparatus 100 may determine whether an event preventing driving is identified in operation S615. An event preventing driving may include an event wherein the electronic apparatus 100 is placed in a situation wherein driving is impossible. The electronic apparatus 100 may identify an event preventing driving based on at least one of real time driving information or a real time photographed image.

As an example, the electronic apparatus 100 may identify an event preventing driving based on real time driving information. The driving information may include at least one of a driving location or a driving direction. In case the location of the electronic apparatus 100 is not changed during a threshold time even though a driving instruction is transmitted to the motor for a driving operation, the electronic apparatus 100 may identify that an event preventing driving occurred.

As an example, the electronic apparatus 100 may identify an event preventing driving based on a real time photographed image. In case a photographed image acquired during a threshold time is not changed, the electronic apparatus 100 may identify that an event preventing driving occurred.

As an example, the electronic apparatus 100 may identify an event preventing driving based on the real time driving information and a real time photographed image.

If an event preventing driving is not identified in operation S615-N, the electronic apparatus 100 may repeatedly acquire the real time driving information and a real time photographed image.

If an event preventing driving is identified in operation S615-Y, the electronic apparatus 100 may acquire event information during a threshold time in operation S620. The event information may include at least one information used for registering an event.

The electronic apparatus 100 may register an event preventing driving based on event information in operation S625. The electronic apparatus 100 may register (or store) an event preventing driving indicating a situation wherein driving of the electronic apparatus 100 is impossible based on the event information acquired during the threshold time. The event information may include a plurality of information. Also, the event information may include at least one of the driving information acquired during the threshold time or a photographed image acquired during the threshold time.

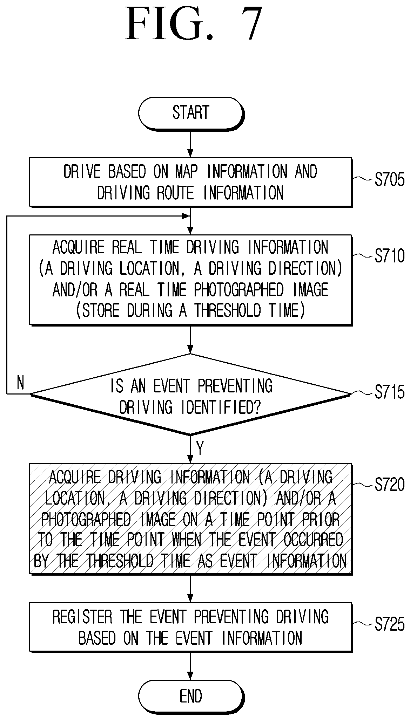

FIG. 7 is a flow chart for illustrating an operation of registering an event preventing driving according to an embodiment of the disclosure.

The operations S705, S710, S715, and S725 in FIG. 7 may correspond to the operations S605, S610, S615, and S625 in FIG. 6. Accordingly, overlapping explanation will be omitted.

If an event preventing driving is identified in operation S715-Y, the electronic apparatus 100 may acquire the driving information and a photographed image on a time point prior to the time point when the event occurred by the threshold time as event information. The threshold time may vary according to the user's setting.

The electronic apparatus 100 may attempt evasion in case it reaches a location that is a little distanced from the location wherein the event preventing driving occurred. Accordingly, the electronic apparatus 100 may need information for a location that is right before where the event occurred, but not information for the location wherein the event preventing driving occurred. The threshold time may be a value indicating the time right before the event occurred.

The electronic apparatus 100 may acquire (or identify) the time point when the event occurred. The electronic apparatus 100 may acquire (or identify or calculate) a time point prior to the time point when the event occurred by the threshold time. The time point when the event occurred may be described as the first time point, and the time point prior to the time point when the event occurred by the threshold time may be described as the second time point. The second time point may be a time point of which absolute time is prior to the first time point.

The electronic apparatus 100 may identify an event preventing driving on the first time point. The electronic apparatus 100 may calculate the second time point based on the first time point and the threshold time. The electronic apparatus 100 may acquire at least one of driving information corresponding to the second time point or a photographed image corresponding to the second time point. The electronic apparatus 100 may acquire information related to the second time point (driving information and/or a photographed image) as event information.

For example, it is assumed that an event occurred on a time point wherein t=5 seconds. If the threshold time is two seconds, the electronic apparatus 100 may acquire driving information and a photographed image on a time point wherein t=3 seconds as event information. Detailed explanation in this regard will be described in FIG. 11.

According to an embodiment, the electronic apparatus 100 may acquire (or store) information related to the first time point (driving information and/or a photographed image) and information related to the second time point (driving information and/or a photographed image) as event information.

The event information may include at least one of the information related to the first time point (driving information and/or a photographed image) or the information related to the second time point (driving information and/or a photographed image).

FIG. 8 is a flow chart for illustrating an operation of identifying an object according to an embodiment of the disclosure.

The operations S805, S810, S815, S820, and S825 in FIG. 8 may correspond to the operations S705, S710, S715, S720, and S725 in FIG. 7. Accordingly, overlapping explanation will be omitted.

After acquiring driving information and a photographed image prior to a time point when an event occurred by the threshold time as event information, the electronic apparatus 100 may acquire (or identify) an object (or a target object) related to the event preventing driving as event information based on a photographed image (the second photographed image) in operation S821. An object related to the event preventing driving may be described as a target object or a cause object.

The electronic apparatus 100 may identify an object related to the event preventing driving through image analysis. An object related to the event preventing driving may indicate an object that provides (or causes) a reason for impossibility of driving.

An object related to the event preventing driving may be an object that is determined to have the highest possibility of interfering with the driving of the electronic apparatus 100 among a plurality of objects.

The electronic apparatus 100 may use an artificial intelligence model for image analysis. The electronic apparatus 100 may input a photographed image included in event information into the artificial intelligence model as input data. The electronic apparatus 100 may acquire an object related to the event preventing driving among a plurality of objects included in the photographed image as output data.

The event information may include at least one of the information related to the first time point (driving information and/or a photographed image), the information related to the second time point (driving information and/or a photographed image), or the object related to the event preventing driving.

FIG. 9 is a flow chart for illustrating an operation of determining a characteristic of an object according to an embodiment of the disclosure.

The operations S905, S910, S915, S920, S921, and S925 in FIG. 9 may correspond to the operations S805, S810, S815, S820, S821, and S825 in FIG. 8. Accordingly, overlapping explanation will be omitted.

After acquiring an object (a target object) related to an event preventing driving, the electronic apparatus 100 may identify whether the target object is an unmovable object in operation S922. An unmovable object may be a predetermined object according to the characteristic of the object. Also, an unmovable object may be an object classified in advance. Further, an unmovable object may be a plurality of objects. For example, unmovable objects may include a sofa, a desk, a wall, a stair, stairs, etc.

If the target object is not an unmovable object in operation S922-N, the electronic apparatus 100 may repeatedly perform the operations S910, S915, S920, S921, and S922.

If the target object is movable, the electronic apparatus 100 may determine that the target object is an object that is temporarily placed on the driving route. The electronic apparatus 100 may determine that there is a high probability that the target object may not be on the driving route at the time of the next driving. The electronic apparatus 100 may determine that there is no need to separately register the event.

If the target object is an unmovable object in operation S922-Y, the electronic apparatus 100 may register the event preventing driving based on event information in operation S925.

If the target object is an unmovable object, the electronic apparatus 100 may determine that there is a high probability that the target object may also interfere with driving at the time of the next driving. The electronic apparatus 100 may register the event, and consider the registered event when driving. For example, the electronic apparatus 100 may drive along a path that evades the location wherein the event occurred.

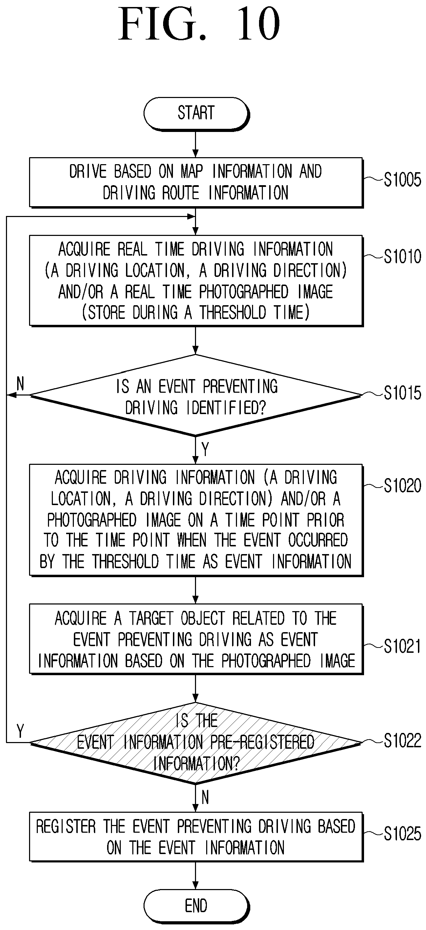

FIG. 10 is a flow chart for illustrating an operation of determining whether event information is stored in advance according to an embodiment of the disclosure.

The operations S1005, S1010, S1015, S1020, S1021, and S1025 in FIG. 10 may correspond to the operations S805, S810, S815, S820, S821, and S825 in FIG. 8. Accordingly, overlapping explanation will be omitted.

After acquiring a target object as event information, the electronic apparatus 100 may identify whether the event information is pre-registered information in operation S1022. Even if an event preventing driving occurs, it may be an event that was already registered in the memory 120. The electronic apparatus 100 may determine whether the acquired event information was registered in advance for preventing redundant storage (or redundant registration).

The electronic apparatus 100 may store at least one pre-registered event information. The electronic apparatus 100 may be in a state of having registered a plurality of event information in advance. If new event information is acquired, the electronic apparatus 100 may determine whether the received event information is included in the pre-registered event information.

If the event information is pre-registered information in operation S1022-Y, the electronic apparatus 100 may repeatedly perform the operations S1010, S1015, S1020, S1021, and S1022.

If the event information is not pre-registered information in operation S1022-N, the electronic apparatus 100 may register the event preventing driving based on the event information in operation S1025.

In case the event preventing driving falls under a new event, the electronic apparatus 100 may register related information in the memory 120. In case an event same as an event that occurred previously occurred, there may be no need for the electronic apparatus 100 to proceed with a separate registration process.

FIG. 11 is a diagram for illustrating information acquired in real time in the electronic apparatus 100.

The embodiment 1110 in FIG. 11 may indicate driving of the electronic apparatus 100 from t=1 to t=5. The electronic apparatus 100 may drive to the north, and then change the driving direction to the east on a specific time point. The electronic apparatus 100 may identify an event preventing driving while driving to the east.

The embodiment 1120 in FIG. 11 may indicate driving information and photographed images acquired on each time point of t=1,2,3,4,5.

On t=1, the electronic apparatus 100 may be located on the coordinate (x1, y1). On t=1, the driving direction of the electronic apparatus 100 may be the direct north direction. The direct north direction may be expressed as (N) or (N, 0). On t=1, the electronic apparatus 100 may acquire a photographed image 1121.

On t=2, the electronic apparatus 100 may be located on the coordinate (x2, y2). On t=2, the driving direction of the electronic apparatus 100 may be the direct north direction. The direct north direction may be expressed as (N) or (N, 0). On t=2, the electronic apparatus 100 may acquire a photographed image 1122.

On t=3, the electronic apparatus 100 may be located on the coordinate (x3, y3). On t=3, the driving direction of the electronic apparatus 100 may be the direct east direction. The direct east direction may be expressed as (E) or (E, 90). On t=3, the electronic apparatus 100 may acquire a photographed image 1123.

On t=4, the electronic apparatus 100 may be located on the coordinate (x4, y4). On t=4, the driving direction of the electronic apparatus 100 may be the direct east direction. The direct east direction may be expressed as (E) or (E, 90). On t=4, the electronic apparatus 100 may acquire a photographed image 1124.

On t=5, the electronic apparatus 100 may be located on the coordinate (x5, y5). On t=5, the driving direction of the electronic apparatus 100 may be the direct east direction. The direct east direction may be expressed as (E) or (E, 90). On t=5, the electronic apparatus 100 may acquire a photographed image 1125.

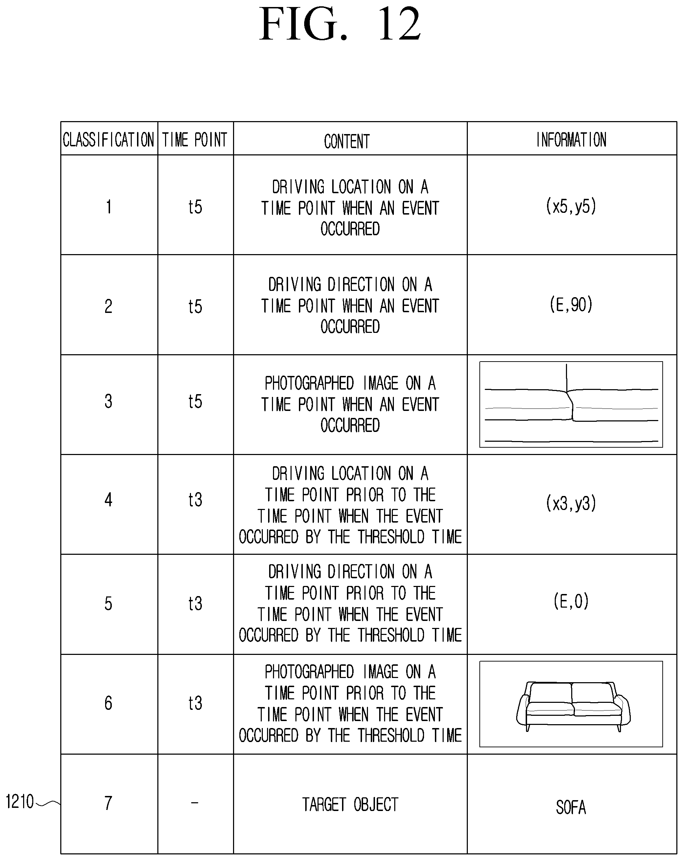

FIG. 12 is a diagram for illustrating event information.

The table 1210 in FIG. 12 may indicate event information acquired by the electronic apparatus 100. The event information may include at least one of information related to the time point when the event occurred (the first time point, t5), information related to the time point prior to the time point when the event occurred by the threshold time (the second time point, t3), or information related to the target object.

The information related to the first time point may include at least one of the driving location on the first time point, the driving direction on the first time point, or a photographed image on the first time point.

The information related to the second time point may include at least one of the driving location on the second time point, the driving direction on the second time point, or a photographed image on the second time point.

FIG. 13 is a flow chart for illustrating operations of the electronic apparatus 100 and the server 200 according to an embodiment of the disclosure.

The operations S1305, S1310, S1315. S1320, and S1321 in FIG. 13 may correspond to the operations S1005, S1010, S1015. S1020, and S1021 in FIG. 10. Accordingly, overlapping explanation will be omitted.

After acquiring at least one of the driving information, a photographed image, or a target object as event information, the electronic apparatus 100 may transmit the event information to the server 200 in operation S1321-2.

The server 200 may receive the event information from the electronic apparatus 100. The server 200 may determine whether the event information is pre-registered information in operation S1322.

The server 200 may store at least one pre-registered event information. The server 200 may be in a state of having registered a plurality of event information in advance. If new event information is received from the electronic apparatus 100, the server 200 may determine whether the received event information is included in the pre-registered event information.

If the event information is pre-registered information in operation S1322-Y, the server 200 may request deletion of the event information to the electronic apparatus 100 in operation S1322-2. The server 200 may transmit a request for deleting the event information to the electronic apparatus 100. Also, the server 200 may transmit a signal including a control instruction for deleting the event information to the electronic apparatus 100.

The electronic apparatus 100 may receive the request for deletion of the event information from the server 200. The electronic apparatus 100 may delete the event information based on the request for deletion of the event information in operation S1322-3. The electronic apparatus 100 may delete the event information in response to the request for deletion of the event information.

If the event information is not pre-registered information in operation S1322-N, the server 200 may register the event preventing driving based on the event information in operation S1325.

According to one or more embodiments, the server 200 may transmit a request for deleting event information from the electronic apparatus 100 after registration is completed to the electronic apparatus 100.

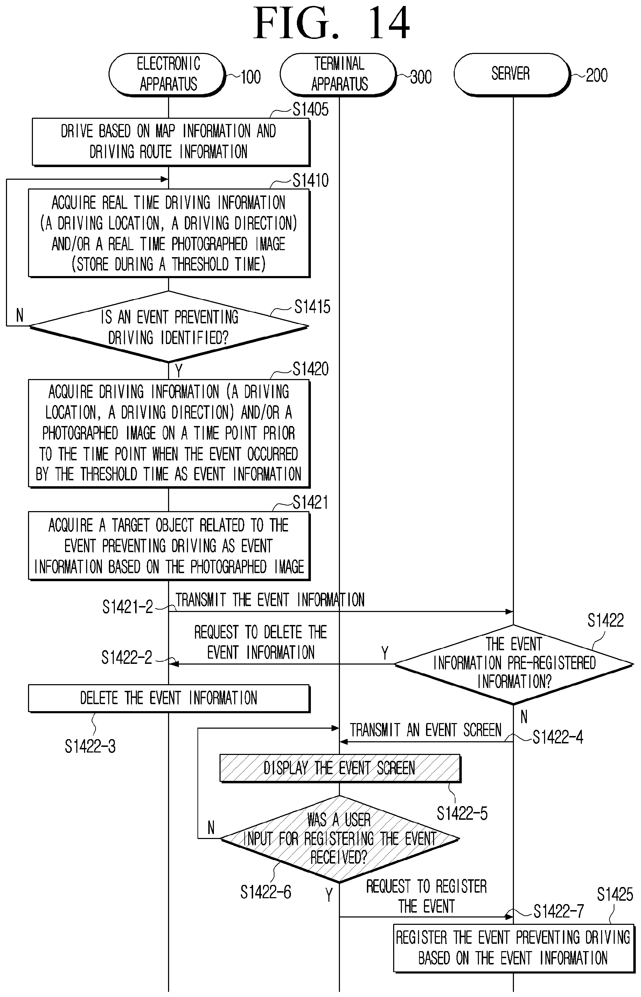

FIG. 14 is a flow chart for illustrating operations of the electronic apparatus 100, the server 200, and a terminal apparatus 300 according to an embodiment of the disclosure.

The operations S1405, S1410, S1415, S1420, S1421, S1421-2, S1422, S1422-2, S1422-3, and S1425 in FIG. 14 may correspond to the operations S1205, S1210, S1215, S1220, S1221, S1221-2, S1222, S1222-2, S1222-3, and S1225 in FIG. 12. Accordingly, overlapping explanation will be omitted.

If event information is not pre-registered information in operation S1422-N, the server 200 may transmit an event screen to the terminal apparatus 300 in operation S1422-4. The terminal apparatus 300 may be an apparatus for providing various kinds of information related to the driving of the electronic apparatus 100 to the user. For example, the terminal apparatus 300 may be the user's smartphone, tablet, or personal computer.

The terminal apparatus 300 may receive an event screen from the server 200. The terminal apparatus 300 may display the event screen on the display of the terminal apparatus 300 in operation S1422-5. The event screen may indicate a screen for registering an event preventing driving. The event screen may also be described as an event registration screen or an event registration guide screen.

After displaying the event screen, the terminal apparatus 300 may determine whether a user input for event registration was received in operation S1422-6. The terminal apparatus 300 may determine whether a user input for event registration was received through the event screen.

If a user input for event registration was not received in operation S1422-6-N, the terminal apparatus 300 may repeat the operations S1422-5 and S1422-6.

If a user input for event registration is received in operation S1422-6-Y, the terminal apparatus 300 may request event registration to the server 200 in operation S1422-7. The terminal apparatus 300 may transmit a signal for event registration to the server 200.

The server 200 may receive the request for event registration from the terminal apparatus 300. When the request for event registration is received, the server 200 may register the event preventing driving based on the event information in operation S1425.

FIG. 15 is a diagram for illustrating an event registration screen according to an embodiment of the disclosure.

The screen 1500 in FIG. 15 may include at least one of guide information 1510 for registering event information, event information 1520, or user interfaces (UIs) 1530, 1540, 1550 for user inputs.

In the guide information 1510, information included in the screen 1500 may include at least one of a text or an image indicating information related to event registration.

The event information 1520 may include at least one information that the electronic apparatus 100 acquired as event information in relation to the event preventing driving. The event information 1520 may correspond to the table 1210 in FIG. 12.

The UI 1530 may be a UI for registering event information. When the UI 1530 is selected, the electronic apparatus 100 may register the event information 1520.

The UI 1540 may be a UI for correcting event information. When the UI 1540 is selected, the electronic apparatus 100 may display a screen for correcting the information included in the event information 1520.

The UI 1550 may be a UI for ignoring registration of event information. When the UI 1550 is selected, the electronic apparatus 100 may not register the event information 1520. The electronic apparatus 100 may delete the temporarily stored event information 1520.

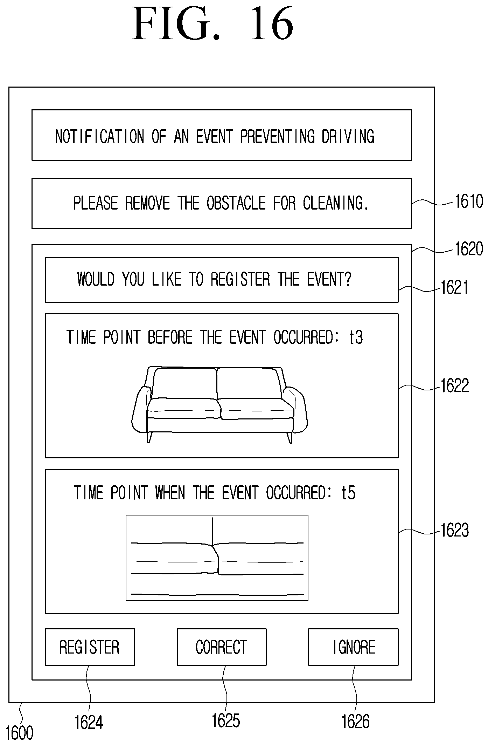

FIG. 16 is a diagram for illustrating an event registration screen according to an embodiment of the disclosure.

The screen 1600 in FIG. 16 may include at least one of guide information 1610 for normal driving of the electronic apparatus 100 or information 1620 related to event registration.

The guide information 1610 may include an operation that is guided to the user for normal driving of the electronic apparatus 100. For example, the guide information 1610 may include a text requesting to take away a target object (an obstacle) for a specific function (cleaning).

The information 1620 related to event registration may include at least one of information 1621 inquiring about whether to proceed with event registration, a photographed image 1622 corresponding to the second time point, a photographed image 1623 corresponding to the first time point, or UIs 1624, 1625, 1626 for user inputs.

In the information 1621 inquiring about whether to proceed with event registration, the screen 1600 may include at least one of a text or an image indicating the information 1620 related to event registration to the user.

The photographed image 1622 corresponding to the second time point may include an image photographed on a time point prior to the time point when the event preventing driving occurred by the threshold time.

The photographed image 1623 corresponding to the first time point may include an image that was photographed on the time point when the event preventing driving occurred.

The UI 1624 may be a UI for registering event information. When the UI 1624 is selected, the electronic apparatus 100 may register event information.

The UI 1625 may be a UI for correcting event information. When the UI 1625 is selected, the electronic apparatus 100 may display a screen for correcting event information.

The UI 1626 may be a UI for ignoring registration of event information. When the UI 1626 is selected, the electronic apparatus 100 may not register event information. The electronic apparatus 100 may delete the temporarily stored event information.

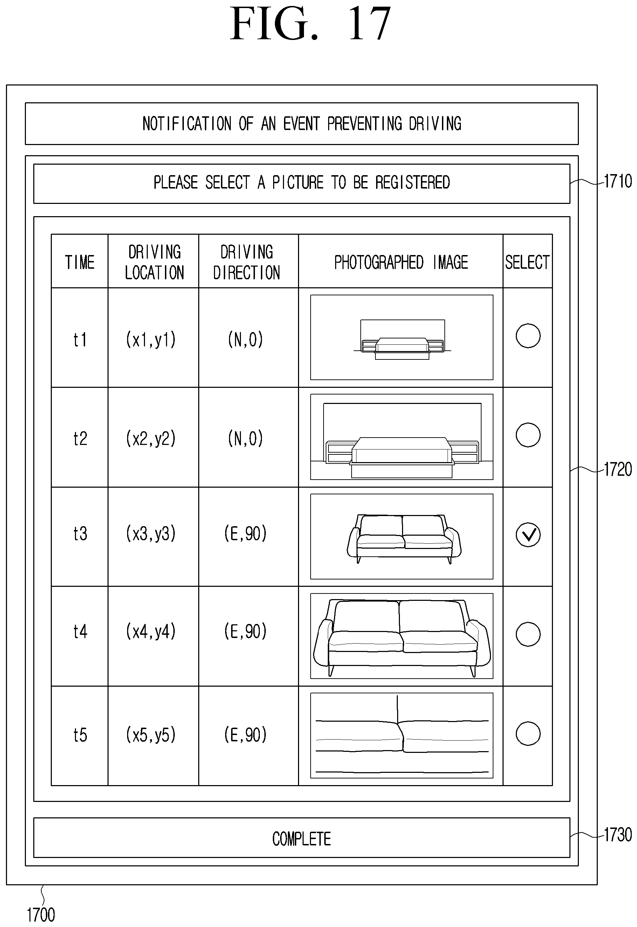

FIG. 17 is a diagram for illustrating an operation of selecting an event photograph according to an embodiment of the disclosure.

The screen 1700 in FIG. 17 may be a screen for selecting a photographed image used in a final registration process. The screen 1700 may include at least one of information 1710 guiding to select a photographed image, information 1720 including at least one photographed image that can be selected by the user, or a UI 1730 for notifying completion of selection.

The information 1710 may include at least one of a text or an image guiding to select a photograph to be finally registered.

The information 1720 may include a plurality of photographed images acquired by the electronic apparatus 100. Also, the information 1720 may include at least one image among a plurality of photographed images photographed by the electronic apparatus 100.

The user may directly select a photographed image to be registered among the plurality of photographed images included in the information 1720. The external appearance of a target object included in the photographed image may vary according to the photographing distance. The electronic apparatus 100 may drive based on the photographed image that is finally registered.

The user may select an image wherein the target object was clearly recognized among the plurality of images through the screen 1700.

According to one or more embodiments, photographed images included in the information 1720 may include photographed images that were acquired between the time point (t=5) when an event preventing driving was identified and a time point (t=3) prior to the time point by the threshold time.

The UI 1730 may be a UI indicating completion of selection. When the UI 1730 is selected, the final photographed image selected through the information 1720 may be registered.

FIG. 18 is a diagram for illustrating an operation of selecting an event location according to an embodiment of the disclosure.

The screen 1800 in FIG. 18 may be a screen for selecting a driving location used in a final registration process. The screen 1800 may include at least one of information 1810 guiding to select a driving location, information 1820 including at least one driving location that can be selected by the user, or a UI 1830 for notifying completion of selection.

The information 1810 may include at least one of a text or an image guiding to select a location wherein an event preventing driving occurred.

The information 1820 may include a map related to the space wherein the electronic apparatus 100 drove. The electronic apparatus 100 may acquire one location among a plurality of locations indicated on the map through a user input. When a user input is received, the electronic apparatus 100 may determine the location selected by the user input as the driving location wherein an event preventing driving occurred. The information 1820 may include a UI (the exclamation mark inside the triangle) indicating the location wherein the event preventing driving occurred that was predicted (or assumed) by the electronic apparatus 100. The user may recognize an approximate location wherein the event occurred through the UI. The user may directly select the correct location wherein the event occurred by referring to the UI. The electronic apparatus 100 may acquire (or receive) the location wherein the event occurred that was selected (or input) by the user. If a user input is not acquired, the electronic apparatus 100 may determine the predicted (or assumed) location as the final location wherein the event occurred.

The UI 1830 may be a UI indicating completion of selection. When the UI 1830 is selected, the electronic apparatus 100 may register the final driving location selected through the information 1820. The final driving location may indicate the location wherein the event preventing driving occurred. Also, the final driving location may be the driving location on the first time event when the event preventing driving occurred.

FIG. 19 is a flow chart for illustrating an operation of performing evasive driving according to an embodiment of the disclosure.

The operations S1905 and S1910 in FIG. 19 may correspond to the operations S605 and S610 in FIG. 6. Accordingly, overlapping explanation will be omitted. The embodiment in FIG. 6 illustrates an embodiment wherein the electronic apparatus 100 identifies an event preventing driving. The embodiment in FIG. 19 illustrates an embodiment wherein the electronic apparatus 100 drives after registering an event preventing driving. Accordingly, the time point of acquisition of the information acquired in the operation S1910 may be different from that of the information acquired in the operation S610.

After acquiring at least one of the driving information or a photographed image in real time, the electronic apparatus 100 may determine whether the current location (or the current driving location or the third location) is a predetermined location in operation S1915.

The predetermined location may be a location corresponding to a registered event. Also, the predetermined location may be a driving location on the second time point. The second time point may be a time point prior to the time point when the event preventing driving occurred by the threshold time. The predetermined location may also be described as an event location, a pre-registered location, a pre-registered event location, an event registration location, an event adjacent location, etc.

An event location may include at least one of a location wherein an event occurred or an adjacent location to a location wherein an event occurred. Also, an event location may include at least one of a location on the first time point when an event occurred or a location on the second time point which is before an event occurred depending on embodiments.

The electronic apparatus 100 may register (or store) a coordinate wherein the electronic apparatus 100 is located on a time point right before the event preventing driving occurs (the second time point) as a predetermined location.

According to one or more embodiments, the electronic apparatus 100 may register (or store) a coordinate wherein the electronic apparatus 100 is located on the time point wherein the event preventing driving occurred (the first time point) as the predetermined location.

If the current location is not the predetermined location in operation S1915-N, the electronic apparatus 100 may repeatedly perform the operations S1910 and S1915.

If the current location is the predetermined location in operation S1915-Y, the electronic apparatus 100 may acquire similarity between the currently photographed image (or the third photographed image) and a predetermined image in operation S1920. As the similarity is higher, the images to be compared may be more similar.

The electronic apparatus 100 may determine whether the similarity is greater than or equal to a threshold value in operation S1925. If the similarity is smaller than the threshold value in operation S1922-N, the electronic apparatus 100 may repeatedly perform the operations S1910, S1915, S1920, and S1925.

According to one or more embodiments, if the similarity is smaller than the threshold value in operation S1922-N, the electronic apparatus 100 may delete the registered driving impossible event. The electronic apparatus 100 may determine that the event preventing driving that was previously registered would not occur anymore. An event deleting operation may be performed in case an event preventing driving is not identified by greater than or equal to a threshold number of times in the location of the pre-registered event.

If the similarity is greater than or equal to the threshold value in operation S1922-Y, the electronic apparatus 100 may evade the location wherein the event occurred in operation S1930.

The location wherein the event occurred may be the driving location on the first time point. The location wherein the event occurred may be described as the first location. The first location may be the location of the electronic apparatus 100 on the first time point when the event preventing driving occurred.

The predetermined location may be the driving location on the second time point. The predetermined location may be described as the second location. The second location may be the location of the electronic apparatus 100 on the second time point prior to the first time point when the event preventing driving occurred by the threshold time. The predetermined location may also be described as a location adjacent to the location wherein the event occurred.

According to one or more embodiments, the electronic apparatus 100 may acquire similarity among images by using an artificial intelligence model. The electronic apparatus 100 may input the currently photographed image and a predetermined image into the artificial intelligence model as input data. The electronic apparatus 100 may acquire a result value indicating the degree of similarity between the currently photographed image and the predetermined image as output data through the artificial intelligence model.

In the operation S1920 in FIG. 19, it was described that the second photographed image and the third photographed image are compared. According to one or more embodiments, a plurality of images may be used in acquiring similarity. Also, there may be a plurality of photographed images corresponding to a registered event. There may also be a plurality of currently photographed images. The second photographed image may include at least one sub-image, and the third photographed image may also include at least one sub-image.

FIG. 20 is a flow chart for illustrating an operation of performing evasive driving according to an embodiment of the disclosure.

The operations S2005, S2010, S2015, S2020, S2025, and S2030 in FIG. 20 may correspond to the operations S1905, S1910, S1915, S1920, S1925, and S1930 in FIG. 19. Accordingly, overlapping explanation will be omitted.

If the current location is a predetermined location (the second location) in operation S2015-Y, the electronic apparatus 100 may determine whether the current driving direction (or the third driving direction) is identical to a predetermined direction in operation S2016. The predetermined direction may be the driving direction of the electronic apparatus 100 on the second time point. The predetermined direction may be described as the second direction.

If the current driving direction is not identical to the predetermined direction in operation S2016-N, the electronic apparatus 100 may repeatedly perform the operations S2010, S2015, and S2016.

If the current driving direction is identical to the predetermined direction in operation S2016-Y, the electronic apparatus 100 may repeatedly perform the operations S2020, S2025, and S2030.

The time point when the event preventing driving occurred may be described as the first time point. The driving direction of the electronic apparatus 100 on the first time point may be described as the first direction (or the first driving direction).

The time point prior to the time point when the event preventing driving occurred by the threshold time may be described as the second time point. The driving direction of the electronic apparatus 100 on the second time point may be described as the second direction (or the second driving direction). The second direction may be described as the predetermined direction.

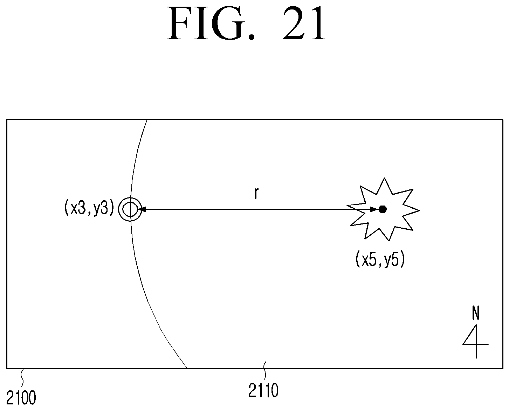

FIG. 21 is a diagram for illustrating an operation of performing evasive driving by using an area corresponding to an event location.

Referring to the embodiment 2100 in FIG. 21, the electronic apparatus 100 may set an event area 2110 based on the driving location (x5, y5) on the first time point. The event area 2110 may mean an area within a threshold distance r based on the driving location (x5, y5) on the first time point.

If it is identified that the electronic apparatus 100 is located in the event area 2110, the electronic apparatus 100 may determine whether to evade the driving location (x5, y5). If it is identified that the electronic apparatus 100 is located in the event area 2110, the electronic apparatus 100 may perform an operation of acquiring similarity between the currently photographed image and the predetermined image (the second photographed image). That is, if it is identified that the electronic apparatus 100 is located in the event area 2110, the electronic apparatus 100 may perform the operations S1925 and S1930 in FIG. 19.

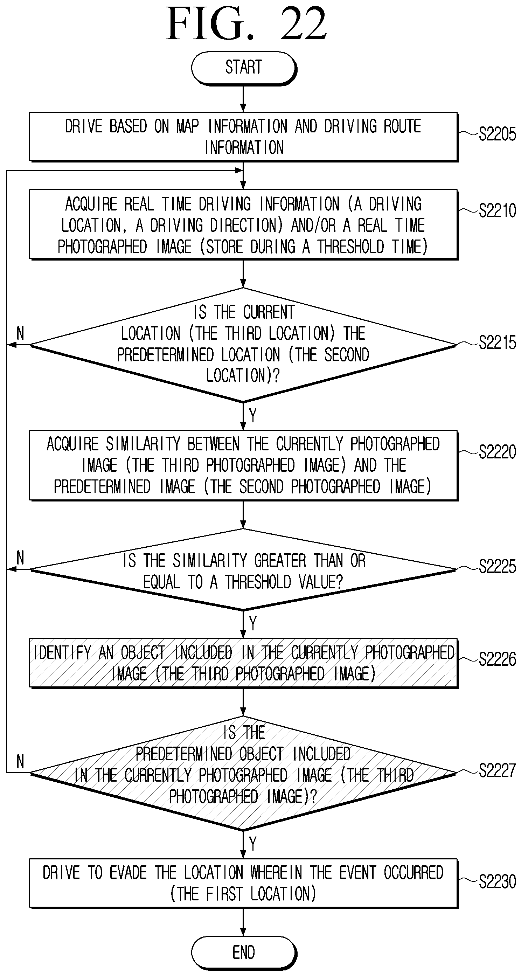

FIG. 22 is a flow chart for illustrating an operation of performing evasive driving according to an embodiment of the disclosure.

The operations S2205, S2210, S2215, S2220, S2225, and S2230 in FIG. 22 may correspond to the operations S1905, S1910, S1915, S1920, S1925, and S1930 in FIG. 19. Accordingly, overlapping explanation will be omitted.

If the similarity between the currently photographed image and the predetermined image (the second photographed image) is greater than or equal to the threshold value in operation S2225-Y, the electronic apparatus 100 may identify an object included in the currently photographed image in operation S2226. The electronic apparatus 100 may analyze the currently photographed image, and identify at least one object included in the currently photographed image.

The electronic apparatus 100 may determine whether a predetermined object is included in the currently photographed image based on the identified at least one object in operation S2227.

According to one or more embodiments, the electronic apparatus 100 may use an artificial intelligence model for analyzing the currently photographed image. The electronic apparatus 100 may input the currently photographed image into the artificial intelligence model as input data. The electronic apparatus 100 may acquire probability values for each of at least one object included in the currently photographed image as output data. The electronic apparatus 100 may determine at least one object included in the currently photographed image based on the probability values included in the output data.

The electronic apparatus 100 may determine whether at least one object included in the currently photographed image falls under a predetermined object.

The predetermined object may be an object which becomes the cause of an event preventing driving. Also, the predetermined object may be an object stored in advance by the user's setting. Further, there may be a plurality of predetermined objects. The predetermined object may also be described as a target object.

If the predetermined object is not included in the currently photographed image in operation S2227-N, the electronic apparatus 100 may repeatedly perform the operations S2210, S2215, S2220, S2225, S2226, and S2227.

If the predetermined object is included in the currently photographed image in operation S2227-Y, the electronic apparatus 100 may drive along a path that evades the location wherein the event occurred (the first location).

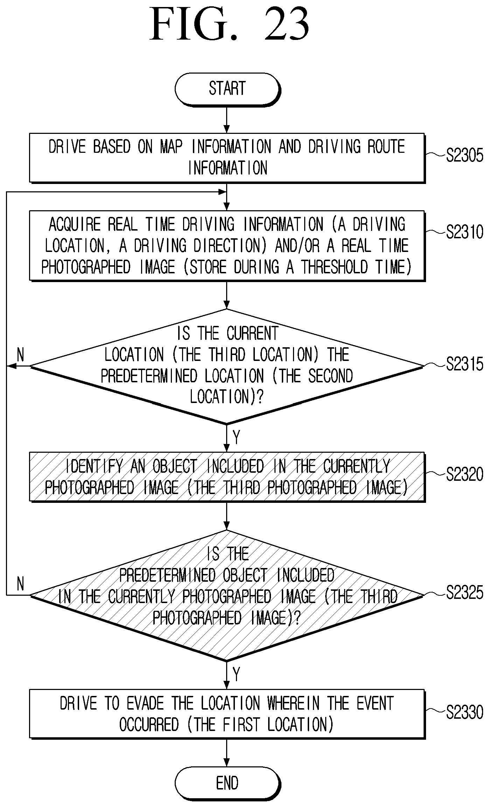

FIG. 23 is a flow chart for illustrating an operation of performing evasive driving according to an embodiment of the disclosure.

The operations S2305, S2310, S2315, and S2330 in FIG. 23 may correspond to the operations S1905, S1910, S1915, and S1930 in FIG. 19. Accordingly, overlapping explanation will be omitted.

The operations S2320 and S2325 in FIG. 23 may correspond to the operations S2226 and S2227 in FIG. 22. Accordingly, overlapping explanation will be omitted.

If the current location of the electronic apparatus 100 is the predetermined location (the second location) in operation S2315-Y, the electronic apparatus 100 may identify an object included in the currently photographed image in operation S2320.

The electronic apparatus 100 may identify whether the predetermined object is included in the currently photographed image in operation S2325. If the predetermined object is not included in the currently photographed image in operation S2325-N, the electronic apparatus 100 may repeatedly perform the operations S2310, S2315, S2320, and S2325.

If the predetermined object is included in the currently photographed image in operation S2325-Y, the electronic apparatus 100 may drive along a path that evades the location wherein the event occurred (the first location) in operation S2330.

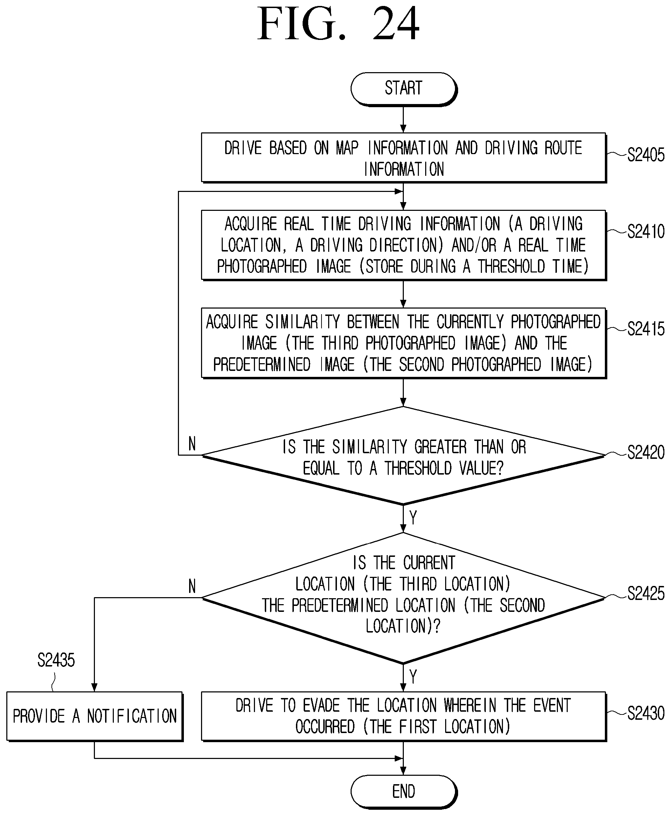

FIG. 24 is a flow chart for illustrating an operation of performing evasive driving according to an embodiment of the disclosure.

The operations S2405, S2410, and S2430 in FIG. 24 may correspond to the operations S1905, S1910, and S1930 in FIG. 19. Also, the operations S2415 and S2420 in FIG. 24 may correspond to the operations S1920 and S1925 in FIG. 19. However, the order of the operations performed in the embodiment in FIG. 19 may be partially different from the order of the operations performed in the embodiment in FIG. 24.

After acquiring the real time driving information and a real time photographed image, the electronic apparatus 100 may acquire similarity between the currently photographed image and the predetermined image (the second photographed image) in operation S2415.

If the similarity is smaller than the threshold value in operation S2420-N, the electronic apparatus 100 may repeatedly perform the operations S2410, S2415, and S2420.

If the similarity is greater than or equal to the threshold value in operation S2420-Y, the electronic apparatus 100 may determine whether the current location is the predetermined location (the second location) in operation S2425.

If the current location is the predetermined location in operation S2425-Y, the electronic apparatus 100 may drive along a path that evades the location wherein the event occurred (the first location) in operation S2430.

If the current location is not the predetermined location in operation S2425-N, the electronic apparatus 100 may provide a notification to the user in operation S2435. While the notification is being provided, the electronic apparatus 100 may be in a temporary halt state.

When the notification is provided, the user may control the driving of the electronic apparatus 100 in relation to the current location.

According to one or more embodiments, if a user input for registering the current location as the location wherein the event preventing driving occurred is received from the user, the electronic apparatus 100 may register the current location. After registering the event, the electronic apparatus 100 may drive along a path that evades the current location.

According to one or more embodiments, if not any input is received from the user during the threshold time, the electronic apparatus 100 may not register the current location as the location wherein the event preventing driving occurred. The electronic apparatus 100 may drive along a path that evades the current location.

According to one or more embodiments, if the current location is not the predetermined location in operation S2425-N, the electronic apparatus 100 may register the current location as the location wherein the event preventing driving occurred. After registering the event, the electronic apparatus 100 may drive along a path that evades the current location.

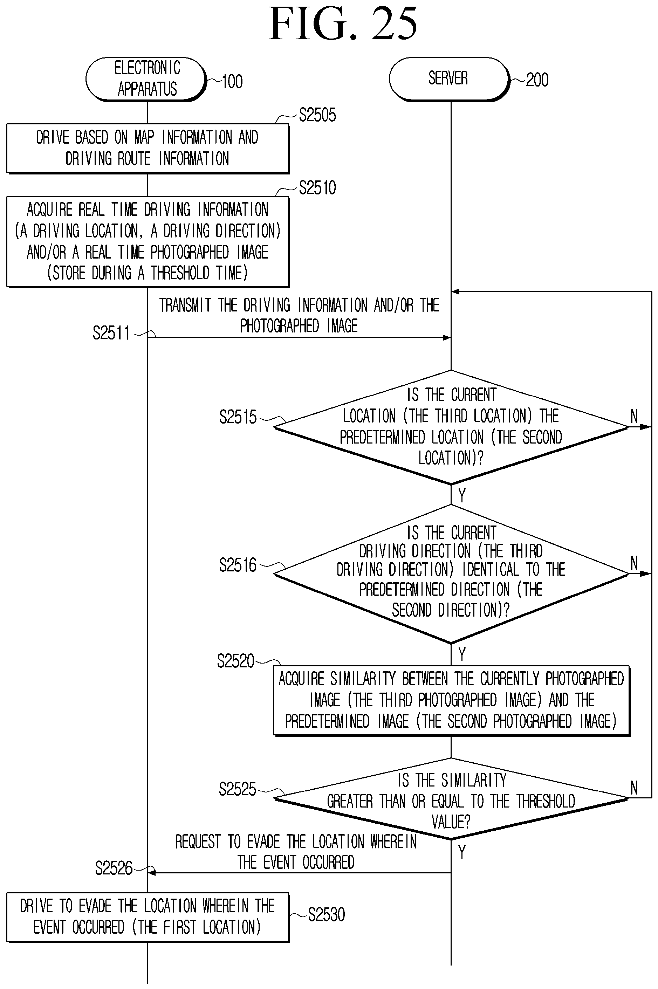

FIG. 25 is a flow chart for illustrating operations of the electronic apparatus 100 and the server 200 according to an embodiment of the disclosure.

The operations S2505 and S2510 in FIG. 25 may correspond to the operations S2005 and S2010 in FIG. 20. Accordingly, overlapping explanation will be omitted.

After acquiring at least one of the real time driving information or a real time photographed image, the electronic apparatus 100 may transmit the driving information and/or the photographed image to the server 200 in operation S2511.

The operations S2515, S2516, S2520, and S2525 in FIG. 25 may correspond to the operations S2015, S2016, S2020, and S2025 in FIG. 20. Accordingly, overlapping explanation will be omitted. In FIG. 20, the operations were performed in the electronic apparatus 100, but in FIG. 25, the operations may be performed in the server 200.

The server 200 may receive the driving information and/or the photographed image from the electronic apparatus 100. The server 200 may identify whether the current location of the electronic apparatus 100 is the predetermined location (the second location) in operation S2515.

If the current location of the electronic apparatus 100 is the predetermined location in operation S2515-Y, the server 200 may identify whether the current driving direction of the electronic apparatus 100 and the predetermined direction (the second direction) are identical in operation S2516.

If the current driving direction of the electronic apparatus 100 and the predetermined direction (the second direction) are identical in operation S2516-Y, the server 200 may acquire similarity between the currently photographed image and the predetermined image (the second photographed image) in operation S2520.

The server 200 may determine whether the similarity is greater than or equal to the threshold value in operation S2525.

If the similarity is greater than or equal to the threshold value in operation S2525, the server 200 may transmit a request for evading regarding the location wherein the event occurred to the electronic apparatus 100 in operation S2526. The server 200 may transmit a signal for evading the location wherein the event occurred to the electronic apparatus 100.

The electronic apparatus 100 may receive the request for evading regarding the location wherein the event occurred from the server 200. The electronic apparatus 100 may drive to evade the location wherein the event occurred (the first location) based on the received request for evading in operation S2530.

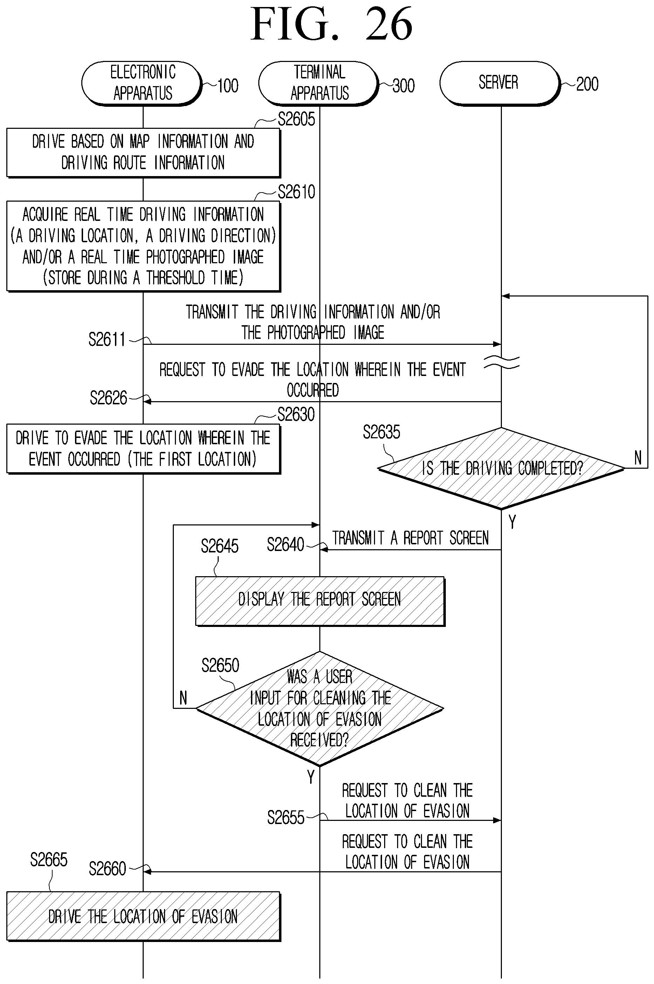

FIG. 26 is a flow chart for illustrating operations of the electronic apparatus 100, the server 200, and the terminal apparatus 300 according to an embodiment of the disclosure.

The operations S2505, S2510, S2511, ... , S2526, and S2530 in FIG. 26 may correspond to the operations S2505, S2510, S2511, ... , S2526, and S2530 in FIG. 25. Accordingly, overlapping explanation will be omitted.

After transmitting a request for evading regarding the location wherein the event occurred, the server 200 may determine whether the driving was completed in operation S2535. If the driving was not completed in operation S2535-N, the server 200 may keep proceeding with the driving until the driving is completed (or stopped).

If the driving is completed in operation S2535-Y, the server 200 may transmit a report screen to the terminal apparatus 300 in operation S2540. The server 200 may generate the report screen based on the received driving information and/or photographed image. The server 200 may transmit the generated report screen to the terminal apparatus 300.

The terminal apparatus 300 may receive the report screen from the server 200. The terminal apparatus 300 may display the report screen in operation S2545. The terminal apparatus 300 may determine whether a user input for cleaning the location of evasion was received in operation S2550.

If a user input for cleaning the location of evasion was not received in operation S2550-N, the terminal apparatus 300 may repeatedly perform the operations S2545 and S2550.

If a user input for cleaning the location of evasion is received in operation S2550-Y, the terminal apparatus 300 may transmit a request for cleaning regarding the location of evasion to the server 200 in operation S2555.

The server 200 may receive the request for cleaning regarding the location of evasion from the terminal apparatus 300. The server 200 may transmit the request for cleaning regarding the location of evasion to the electronic apparatus 100 in operation S2560.

The electronic apparatus 100 may receive the request for cleaning regarding the location of evasion from the server 200. The electronic apparatus 100 may perform driving for the location of evasion in operation S2565.

The user may identify the location wherein evasion occurred through the report screen displayed on the terminal apparatus 300. The user may remove the reason that caused evasion (e.g., remove an obstacle). The user may want to additionally clean an area that the electronic apparatus 100 did not clean. The user may input an instruction for additional cleaning through the operation S2550. If the user input is received through the terminal apparatus 300, the instruction for additional cleaning may be transmitted to the electronic apparatus 100. The electronic apparatus 100 may start cleaning for the location wherein evasion occurred according to the user instruction.

In case an additional cleaning operation is performed, the electronic apparatus 100 may perform a cleaning operation only for the location (or the area) wherein the evading operation occurred.

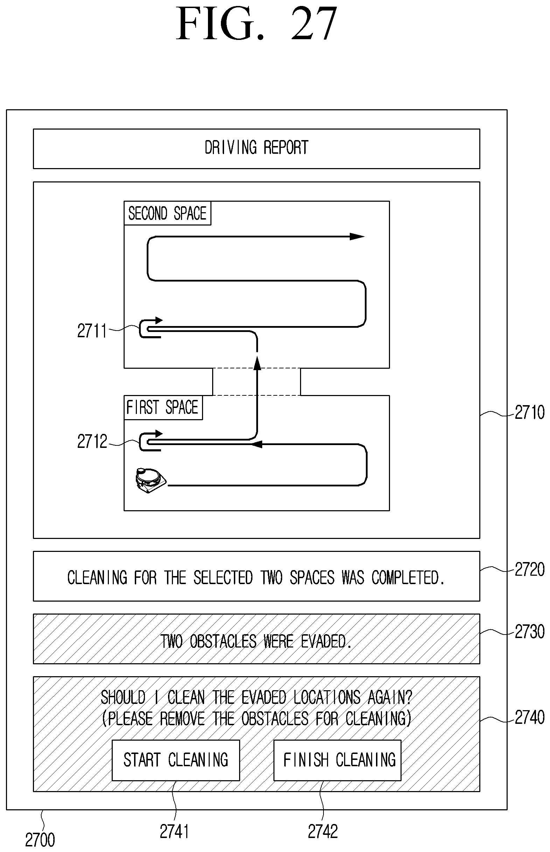

According to one or more embodiments, the report screen in FIG. 27 to FIG. 30 may be displayed on the electronic apparatus 100. The electronic apparatus 100 may include a display. The electronic apparatus 100 may display the report screen through an internal display.

According to one or more embodiments, the report screen in FIG. 27 to FIG. 30 may be displayed on the server 200. The server 200 may provide the corresponding result screen through a specific website address.

According to one or more embodiments, the report screen in FIG. 27 to FIG. 30 may be displayed on the terminal apparatus 300. The terminal apparatus 300 may include a display. The terminal apparatus 300 may display the report screen through an internal display.

FIG. 27 is a diagram for illustrating a report screen according to an embodiment of the disclosure.

The screen 2700 in FIG. 27 may be a screen indicating a driving result of the electronic apparatus 100. The screen 2700 may include at least one of moving information 2710, driving result information 2720, evasion information 2730, or guide information 2740.

The moving information 2710 may include map information for a space wherein the electronic apparatus 100 drove and/or information on the driving route of the electronic apparatus 100. Also, the moving information 2710 may include UIs 2711, 2712 indicating locations wherein an evading operation occurred on the map information. The user can easily identify a location wherein evasion occurred through the UIs 2711, 2712.

The shape of a displayed UI may vary according to the cause of evasion. In case evasion occurred for the first cause, the moving information 2710 may include a UI of a first shape displayed on the corresponding location. In case evasion occurred for the second cause, the moving information 2710 may include a UI of a second shape displayed on the corresponding location.

The driving result information 2720 may include result information for an operation performed by the electronic apparatus 100. For example, the driving result information 2720 may include information on a space wherein the electronic apparatus 100 performed a cleaning operation and/or whether the operation was completed.

The evasion information 2730 may include result information wherein the electronic apparatus 100 evaded without completing driving for some locations (or areas). For example, it is assumed that evading operations are performed for two locations for evading obstacles. The evasion information 2730 may include at least one of the number of times of evasion, the cause of evasion, or the location of evasion. The evasion information may also be described as incompletion result information.

The guide information 2740 may include information guiding an additional operation for a location of evasion. The guide information 2740 may include at least one of a text guiding an additional operation or UIs 2741, 2742 guiding a user input.

A text guiding an additional operation may include a text inquiring about whether to perform an additional complementing operation (e.g., Should I clean the location of evasion?) and/or a text guiding to remove the cause of evasion (e.g., Please remove the obstacle for cleaning).

If a user input selecting the UI 2741 is received, the electronic apparatus 100 may perform an additional complementing operation.

If a user input selecting the UI 2742 is received, the electronic apparatus 100 may not perform an additional complementing operation.

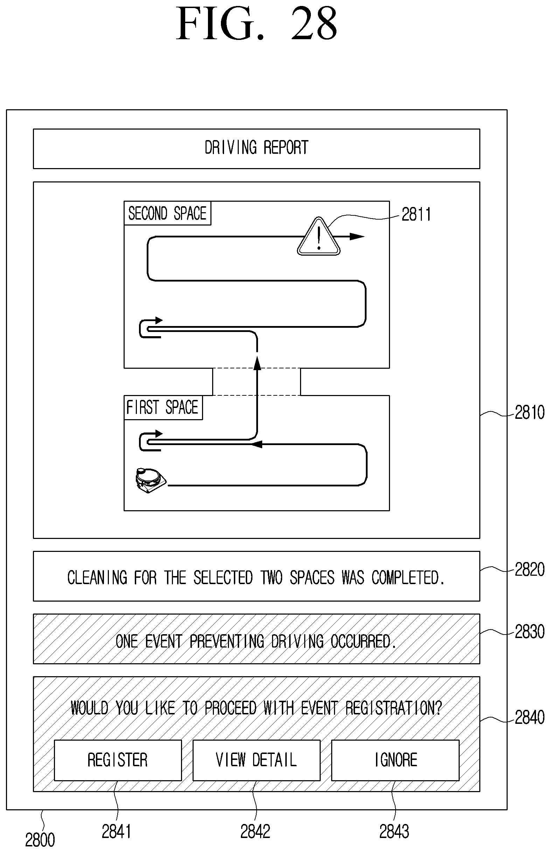

FIG. 28 is a diagram for illustrating a report screen according to an embodiment of the disclosure.

The screen 2800 in FIG. 28 may be a screen including a driving result of the electronic apparatus 100. The screen 2800 may include at least one of moving information 2810, driving result information 2820, event occurrence information 2830, or guide information 2840.

The moving information 2810 and the driving result information 2820 in FIG. 28 may correspond to the moving information 2710 and the driving result information 2720 in FIG. 27. Accordingly, overlapping explanation will be omitted.

The moving information 2810 in FIG. 28 may include a UI 2811 indicating an event preventing driving. If an event preventing driving is identified, the moving information 2810 may include a UI 2811 displayed on the location wherein the event preventing driving occurred. The user can easily identify the location wherein the event preventing driving occurred in the entire space through the UI 2811.

The event occurrence information 2830 may include information indicating whether an event preventing driving occurred during driving. The event occurrence information 2830 may include at least one of the number of times that an event preventing driving was identified or a location wherein an event preventing driving was identified.

The guide information 2840 may include information guiding the user for registering an event preventing driving. The guide information 2840 may include at least one of a text guiding event registration or UIs 2841, 2842, 2843 guiding a user input.

If a user input selecting the UI 2841 is received, an event preventing driving may be registered. The subject of the operation may be the electronic apparatus 100, the server 200, or the terminal apparatus 300.

If a user input selecting the UI 2842 is received, detailed information related to impossibility of driving may be provided. The detailed information may include event information. The subject of the operation may be the electronic apparatus 100, the server 200, or the terminal apparatus 300.

If a user input selecting the UI 2843 is received, the event registration process may not proceed anymore.

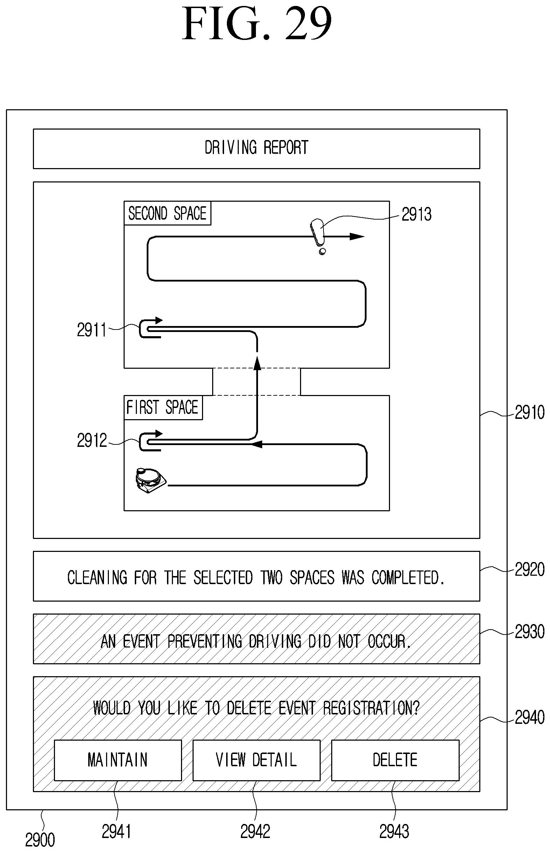

FIG. 29 is a diagram for illustrating a report screen according to an embodiment of the disclosure.

The screen 2900 in FIG. 29 may be a screen indicating a driving result of the electronic apparatus 100. The screen 2900 may include at least one of moving information 2910, driving result information 2920, event occurrence information 2930, or guide information 2940.

The moving information 2910 and the driving result information 2920 in FIG. 29 may correspond to the moving information 2810 and the driving result information 2820 in FIG. 28. Accordingly, overlapping explanation will be omitted.

The moving information 2910 may include UIs 2911, 2912 indicating that an evading operation was performed in the registered location.

The moving information 2910 may include a UI 2913 indicating that an event preventing driving is not identified anymore in the registered location.

The UIs 2911, 2912 and the UI 2913 may have different shapes or colors.

The UI 2913 in FIG. 29 and the UI 2811 in FIG. 28 may have different shapes or colors.

It is assumed that a location wherein an event preventing driving occurred is registered. However, the event preventing driving may not occur anymore in the registered location as a result of the driving of the electronic apparatus 100. Also, a determining operation related to the event (e.g., the embodiment in FIG. 19) may not be needed in the registered location anymore. Notification information for deleting the registered event may be provided to the user.

The user can easily recognize that the registered event may be cancelled (or deleted) through the UI 2911.

The event occurrence information 2930 may include information on whether an event preventing driving occurred. It is assumed that an event preventing driving does not occur. The event occurrence information 2930 may include a text indicating that an event preventing driving did not occur.

The guide information 2940 may include at least one of a text guiding to delete the registered event or UIs 2941, 2942, 2943 guiding a user input.

If a user input selecting the UI 2941 is received, the registered event may be maintained without being deleted.

If a user input selecting the UI 2942 is received, detailed information related to the registered event may be provided to the user.

If a user input selecting the UI 2943 is received, the registered event may be deleted.

In FIG. 29, an embodiment of inquiring to the user for deleting an event was described. However, according to one or more embodiments, a registered event preventing driving may automatically be deleted without separately inquiring to the user. If the event preventing driving is not identified in the predetermined location of the registered event, the electronic apparatus 100 may delete the previously registered event.

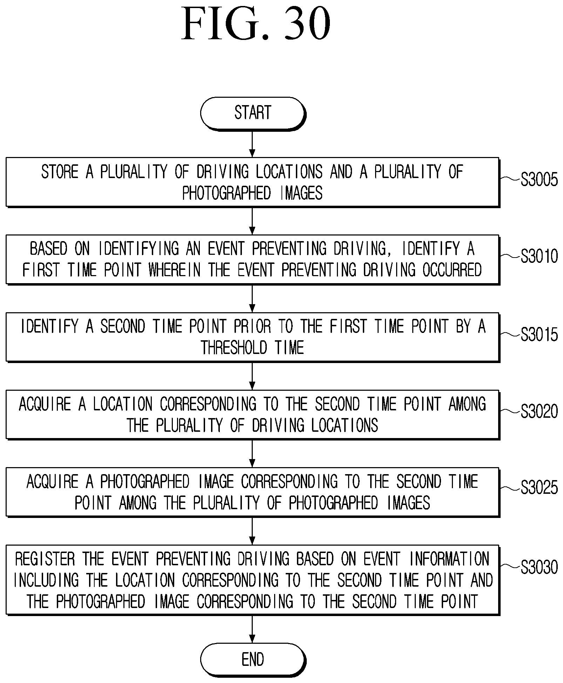

FIG. 30 is a flow chart for illustrating a controlling method of the electronic apparatus 100 according to an embodiment of the disclosure.

Referring to FIG. 30, a controlling method of an electronic apparatus may include the operations of storing a plurality of driving locations and a plurality of photographed images (S3005), based on identifying an event preventing driving, identifying a first time point wherein the event preventing driving occurred (S3010), identifying a second time point prior to the first time point by a threshold time (S3015), acquiring a location corresponding to the second time point among the plurality of driving locations (S3020), acquiring a photographed image corresponding to the second time point among the plurality of photographed images (S3025), and registering the event preventing driving based on event information including the location corresponding to the second time point and the photographed image corresponding to the second time point (S3030).

The controlling method may further include the operation of acquiring a first location corresponding to the first time point, and a first photographed image corresponding to the first time point, and the location corresponding to the second time point may be a second location, the photographed image corresponding to the second time point may be a second photographed image, and the second time point may be a time point prior to the first time point.

The controlling method may further include the operation of identifying a target object related to the event preventing driving based on the second photographed image, and in the registering operation (S3030), the event preventing driving may be registered based on the event information including the second location, the second photographed image, and the target object.

In the registering operation (S3030), based on the target object being a predetermined object indicating an unmovable object, the event preventing driving may be registered based on the event information.

In the registering operation (S3030), the event preventing driving may be registered based on the event information including the first location, the second location, the first photographed image, and the second photographed image.

The electronic apparatus may include a first sensor and a second sensor, and the controlling method may further include the operations of acquiring a plurality of driving locations through the first sensor and acquiring a plurality of photographed images through the second sensor.

The controlling method may further include the operations of, after registering the event preventing driving, acquiring a third location corresponding to a third time point, and acquiring a third photographed image corresponding to the third time point, based on the third location corresponding to the second location, acquiring similarity between the second photographed image and the third photographed image, and based on the similarity being greater than or equal to a threshold value, driving to evade the third location.

The controlling method may further include the operations of acquiring a plurality of driving directions wherein the electronic apparatus drives, acquiring a first direction corresponding to the first time point, and acquiring a second direction corresponding to the second time point, and in the registering operation (S3030), the event preventing driving may be registered based on the event information including the second location, the second direction, and the second photographed image.

The controlling method may further include the operations of acquiring a third direction corresponding to the third time point, based on the third location corresponding to the second location, identifying whether the third driving direction corresponds to the second direction, and based on the third driving direction corresponding to the second direction, acquiring the similarity between the second photographed image and the third photographed image.

The controlling method may further include the operation of providing (i.e., generating) a screen including a user interface (UI) indicating the first location.

The controlling method of an electronic apparatus as in FIG. 30 may be executed on an electronic apparatus having the configurations as in FIG. 1, FIG. 2, and FIG. 3, and may also be executed on electronic apparatuses having other configurations.

Also, methods according to the aforementioned one or more embodiments of the disclosure may be implemented in forms of applications that can be installed on conventional electronic apparatuses.

In addition, the methods according to the aforementioned embodiments of the disclosure may be implemented just with software upgrade, or hardware upgrade of conventional electronic apparatuses.

Further, the aforementioned one or more embodiments of the disclosure may be performed through an embedded server provided on an electronic apparatus, or an external server of at least one of an electronic apparatus or a display apparatus.

According to an embodiment of the disclosure, the aforementioned various embodiments may be implemented as software including instructions stored in machine-readable storage media, which can be read by machines (e.g.: computers). The machines refer to apparatuses that call instructions stored in a storage medium, and can operate according to the called instructions, and the apparatuses may include an electronic apparatus according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment of the disclosure, the methods according to the aforementioned various embodiments may be provided while being included in a computer program product. A computer program product refers to a product, and it can be traded between a seller and a buyer. A computer program product can be distributed in the form of a storage medium that is readable by machines (e.g.: a compact disc read only memory (CD-ROM)), or distributed on-line through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components (e.g.: a module or a program) according to the aforementioned various embodiments may consist of a singular object or a plurality of objects. Further, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Operations performed by a module, a program, or other components according to the various embodiments may be executed sequentially, in parallel, repetitively, or heuristically. Or, at least some of the operations may be executed in a different order or omitted, or other operations may be added.

Also, while example embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a first sensor;
a second sensor;
at least one memory storing at least one instruction; and
at least one processor operably connected with the first sensor, the second sensor, and the at least one memory,
wherein the at least one processor, executing the at least one instruction, configured to:
acquire sensing data through the first sensor,
identify a plurality of driving locations based on the sensing data,
acquire a plurality of photographed images through the second sensor,
store the plurality of driving locations and the plurality of photographed images in the at least one memory, and
based on identifying an event preventing driving, identify a first time point corresponding to the event preventing driving,
identify a second time point preceding the first time point by a threshold time,
identify a driving location, among the plurality of driving locations, corresponding to the second time point,
identify a photographed image, among the plurality of photographed images, corresponding to the second time point, and
register the event preventing driving based on event information, and
wherein the event information comprises the driving location corresponding to the second time point and the photographed image corresponding to the second time point.

2. The electronic apparatus of claim 1, wherein the at least one processor is configured to:
identify a first driving location, among the plurality of driving locations, corresponding to the first time point, and
identify a first photographed image, among the plurality of photographed images, corresponding to the first time point, and
wherein the driving location corresponding to the second time point comprises a second driving location,
wherein the photographed image corresponding to the second time point comprises a second photographed image, and
wherein the second time point precedes the first time point.

3. The electronic apparatus of claim 2, wherein the at least one processor is configured to:
identify a target object related to the event preventing driving based on the second photographed image, and
wherein the event information further comprises information regarding the target object.

4. The electronic apparatus of claim 3, wherein the at least one processor is configured to:
based on the target object being a predetermined object indicating an unmovable object, register the event preventing driving based on the event information.

5. The electronic apparatus of claim 2, wherein the event information includes the first driving location, the second driving location, the first photographed image, and the second photographed image.

6. The electronic apparatus of claim 1, wherein the first sensor comprises one of a LiDAR sensor, an infra-red sensor, a three-dimensional (3D) depth camera, and a 3D visual sensor, and
wherein the second sensor comprises an image sensor configured to acquire photographic images.

7. The electronic apparatus of claim 2, wherein the at least one processor is configured to:
identify a third driving location, among the plurality of driving locations, corresponding to a third time point,
identify a third photographed image, among the plurality of photographed images, corresponding to the third time point,
based on the third driving location corresponding to the second driving location, acquire a degree of similarity between the second photographed image and the third photographed image, and
based on the degree of similarity being greater than or equal to a threshold value, drive along a path that evades the third driving location.

8. The electronic apparatus of claim 7, wherein the at least one processor is configured to:
acquire a plurality of driving directions corresponding to one or more directions in which the electronic apparatus moves, and
based on identifying the event preventing driving, identify a first driving direction, among the plurality of driving directions, corresponding to the first time point, and
identify a second driving direction, among the plurality of driving directions, corresponding to the second time point, and
wherein the event information includes the second driving location, the second driving direction, and the second photographed image.

9. The electronic apparatus of claim 8, wherein the at least one processor is configured to:
identify a third driving direction, among the plurality of driving directions, corresponding to the third time point, and
based on the third driving location corresponding to the second driving location and the third driving direction corresponding to the second driving direction, identify a degree of similarity between the second photographed image and the third photographed image, and
based on the degree of similarity being greater than or equal to a threshold value, drive along a path that evades the third driving location.

10. The electronic apparatus of claim 2, wherein the at least one processor is configured to:
generate a user interface indicating the first driving location.

11. A method of controlling an electronic apparatus comprising:
acquiring sensing data;
identifying a plurality of driving locations based on the sensing data;
acquiring a plurality of photographed images;
storing the plurality of driving locations and the plurality of photographed images;
based on identifying an event preventing driving, identifying a first time point corresponding to the event preventing driving;
identifying a second time point preceding the first time point by a threshold time;
identifying a driving location, among the plurality of driving locations, corresponding to the second time point;
identifying a photographed image, among the plurality of photographed images, corresponding to the second time point; and
registering the event preventing driving based on event information, and
wherein the event information comprises the driving location corresponding to the second time point and the photographed image corresponding to the second time point.

12. The method of claim 11, wherein the method comprising:
identifying a first driving location, among the plurality of driving locations, corresponding to the first time point; and
identifying a first photographed image, among the plurality of photographed images, corresponding to the first time point, and
wherein the driving location corresponding to the second time point comprises a second driving location,
wherein the photographed image corresponding to the second time point comprises a second photographed image, and
wherein the second time point precedes the first time point.

13. The method of claim 12, wherein the method comprising:
identifying a target object related to the event preventing driving based on the second photographed image, and
wherein the event information further comprises information regarding the target object.

14. The method of claim 13, wherein the registering comprising:
based on the target object being a predetermined object indicating an unmovable object, registering the event preventing driving based on the event information.

15. The method of claim 12, wherein the event information includes the first driving location, the second driving location, the first photographed image, and the second photographed image.
